# EUROPÄISCHE PATENTSCHRIFT

(11) **EP 2 540 537 B1**
(45) Veröffentlichungstag und Bekanntmachung des Hinweises auf die Patenterteilung: **22.03.2017**
(21) Anmeldenummer: 12172211.0
(22) Anmeldetag: 15.06.2012
(51) Int. Cl.: B60G 17/052

(54) **Luftfederungsanlage für ein Nutzfahrzeug**
Pneumatic spring assembly for a commercial vehicle
Installation de ressort pneumatique pour un véhicule utilitaire

(30) Priorität: 01.07.2011 DE 102011051503
(43) Veröffentlichungstag der Anmeldung: 02.01.2013
(73) Patentinhaber: Haldex Brake Products Aktiebolag, 261 24 Landskrona (SE)
(72) Erfinder: Sulzyc, Georg, 68305 Mannheim (DE); Becke, Stefan, 68804 Altlussheim (DE); Nöcker, Joachim, 69412 Eberbach (DE); Tschöke, Tobias, 69121 Heidelberg (DE)
(74) Vertreter: REHBERG HÜPPE + PARTNER

(56) Entgegenhaltungen:
- EP-A2- 2 239 157
- EP-B1- 1 687 159
- WO-A1-2010/043594
- WO-A1-2011/076304
- DE-A1- 19 916 040
- DE-A1-102009 045 734
- DE-C1- 19 944 873
- ES-A1- 2 277 765

## Beschreibung

### TECHNISCHES GEBIET DER ERFINDUNG

Die Erfindung betrifft eine Luftfederungsanlage für ein Nutzfahrzeug, welche über eine Hebe-Senk-Ventilbaugruppe eine manuelle Veränderung eines Niveaus, beispielsweise zu einem Be-und Entladen an einer Rampe, und andererseits eine elektrische Niveauregelung, insbesondere während eines Fahrbetriebs, ermöglicht.

### STAND DER TECHNIK

EP 0 520 148 B1 offenbart eine Luftfederungsanlage, in welcher eine als Vorratsbehälter ausgebildete Druckluftquelle über eine Niveauregelventilbaugruppe und eine Hebe-Senk-Ventilbaugruppe pneumatisch mit Luftfederbälgen verbunden ist. Die Niveauregelventilbaugruppe wird automatisch durch mechanische Betätigung entsprechend einer Veränderung des Niveaus, also des Abstandes eines Fahrzeugaufbaus mit einem Fahrzeugrad oder einer Fahrzeugachse, in eine Belüftungsstellung, eine Sperrstellung oder eine Entlüftungsstellung gesteuert. Die Niveauregelventilbaugruppe wird eingesetzt, um während des Fahrbetriebs eine Soll-Niveauhöhe vorzugeben und zu halten, was insbesondere unabhängig von einer Beladung, Längsund Querbeschleunigungen beispielsweise bei Kurvenfahrt und Oszillationen, Unebenheiten und Neigungen der Fahrbahn erfolgen soll. Über die Hebe-Senk-Ventilbaugruppe kann der Fahrer für ruhendes Fahrzeug willkürlich das Niveau verändern, also den Fahrzeugaufbau heben oder senken, was beispielsweise zur Anpassung an eine Rampe für Be- und Entladevorgänge erfolgen kann. Hierzu besitzt die Hebe-Senk-Ventilbaugruppe einen Wählhebel, welcher mit einer Schaltwelle um eine Rotationsachse verschwenkt werden kann zwischen Schwenkstellungen Heben, Senken und Stopp. Die Schaltwelle trägt Nocken, über welche abhängig vom Rotationswinkel der Schaltwelle und des Wählhebels Stößel betätigt werden können, die wiederum Ein- und Auslassventile betätigen. In der Stellung Heben wird ein Einlassventil geöffnet, welches einen Anschluss der Hebe-Senk-Ventilbaugruppe, der unter Umgehung der Niveauregelventilbaugruppe mit der Druckluftquelle verbunden ist, mit einem Ausgang zu den Luftfederbälgen verbindet. Hingegen wird in der Stellung Senken ein Auslassventil geöffnet, welches den zu den Luftfederbälgen führenden Ausgang entlüftet. In der zwischen den Stellungen Heben und Senken angeordneten Stellung Stopp sind die zuvor genannten Einlass- und Auslassventile geschlossen, sodass der Druck in den Luftfederbälgen konstant gehalten wird. In der Hebe-Senk-Ventilbaugruppe ist eine sogenannte Totmann-Feder eingesetzt, welche als Torsionsfeder ausgebildet ist. Die Totmann-Feder führt den Wählhebel mit Schaltwelle von einer manuell herbeigeführten Stellung Heben oder Senken zurück in die Stellung Stopp, wenn der Fahrer keine Kräfte mehr auf den Wählhebel aufbringt. Die HebeSenk-Ventilbaugruppe besitzt darüber hinaus einen pneumatischen Steueranschluss, welcher in einen Druckraum mündet. Der Druckraum ist von einem Steuerkolben begrenzt, der durch eine Stirnseite der Schaltwelle gebildet ist. Durch Vorgabe eines pneumatischen Steuerdrucks in dem Druckraum kann eine Axialverschiebung der Schaltwelle mit Wählhebel herbeigeführt werden, welche zur Folge hat, dass bei geschlossenem Einlassventil und geschlossenem Auslassventil ein Verbindungsventil geöffnet wird. Für geöffnetes Verbindungsventil ist die Niveauregelventilbaugruppe über die Hebe-Senk-Ventilbaugruppe mit den Luftfederbälgen verbunden, sodass automatisch über die Niveauregelventilbaugruppe der Druck in den Luftfederbälgen und damit letztendlich das Niveau geregelt werden kann. Die durch pneumatische Druckbeaufschlagung des Druckraums herbeigeführte Stellung entspricht einer Stellung Fahrt, welche über eine Steuereinheit mit entsprechender Ansteuerung eines Magnetventils und derart ausgesteuerten Steuerdruck automatisiert eingenommen wird, wenn sich das Fahrzeug in Bewegung setzt und beispielsweise eine Grenzgeschwindigkeit überschritten wird. Diese Luftfederungs-anlage basiert auf einer pneumatischen Reihenschaltung der Hebe-Senk-Ventilbaugruppe, der Niveauregelventilbaugruppe und der Luftfederbälge (mit den genannten Umgehungsmöglichkeiten). Eine elektrische Niveauregelung ist für die aus dieser Druckschrift bekannten Ausführungsformen nicht möglich.

Gemäß EP 1 382 469 A2 sind zwischen eine Druckluftquelle und Luftfederbälge ein 2/2-Wegeventil in Ausbildung als Sperrventil sowie ein 3/2-Wegeventil in Ausbildung als Be- und Entlüftungsventil zwischengeschaltet. Hierbei können die beiden genannten Ventile sowohl direkt über zugeordnete Elektromagnete elektrisch für eine elektrische Niveauregelung betätigt werden als auch direkt manuell betätigt werden über jeweils einen den Ventilen zugeordneten Stößel, um manuell ein Heben oder Senken zu verursachen.

DE 199 44 873 C1 offenbart eine Luftfederungsanlage, bei welcher in parallelen Leitungszweigen in einem ersten Leitungszweig eine mechanisch angesteuerte Niveauregelventilbaugruppe angeordnet ist und in einem zweiten Leitungszweig eine rein elektrisch angesteuerte Niveauregelventilbaugruppe angeordnet ist. Die mechanische Niveauregelventilbaugruppe in dem ersten Leitungszweig besitzt einen Niveausensor, dessen Ausgangssignal einer Steuereinheit zugeführt wird, welche, auch auf Grundlage dieses Niveausignals, die rein elektrisch angesteuerte Niveauregeventilbaugruppe in dem anderen Leitungszweig ansteuert. Die Steuereinheit steuert auch ein in dem ersten Leitungszweig angeordnetes Sperrventil an, über welches dieser erste Leitungszweig absperrbar ist, wenn die rein elektronische Niveauregelung in den zweiten Leitungszweig erfolgt. In einer weiteren Ausführungsform dieser Druckschrift ist eine Druckluftquelle über eine mechanische Niveauregelventilbaugruppe, eine Hebe-Senk-Ventilbaugruppe, ein Wechselventil und eine rein elektrisch angesteuerte Niveauregelventilbaugruppe in Reihenschaltung mit Luftfederbälgen verbunden. Hier kann der Fahrer manuell Einfluss auf das Niveau der Luftfederungsanlage sowohl über die Hebe-Senk-Ventilbaugruppe als auch über einen elektrischen Wahlschalter nehmen, über welchen ebenfalls ein manuell verursachtes Heben und Senken bei ordnungsgemäßer Spannungsversorgung über die rein elektronische Niveauregelventilbaugruppe veranlasst werden kann.

Die Druckschrift DE 199 16 040 B4 offenbart eine Luftfederungsanlage, bei welcher zwischen die Druckluftquelle und die hier zweikreisigen Luftfederbälge eine Niveauregelventilbaugruppe zwischengeschaltet ist. Die Niveauregelventile der Niveauregelventilbaugruppe sind hierbei elektrisch und pneumatisch über eine manuell betätigte Hebe-Senk-Ventilbaugruppe steuerbar. Die Ansteuereinheiten der Niveauregelventile erzeugen gemäß dem hierfür verwendeten DIN-Symbol einen Steuerdruck für einen Steuerkolben des Niveauregelventils unter Einsatz eines elektrisch gesteuerten elektropneumatischen Vorsteuerventils aus einem Druck, welcher der Ansteuereinheit von der Hebe-Senk-Ventilbaugruppe zugeführt wird.

EP 1 687 159 B1 offenbart die parallele Anordnung eines ausschließlich elektrisch betätigten Leitungszweigs mit einer Niveauregelventilbaubaugruppe mit einem Be- und Entlüftungsventil in Ausbildung als 3/2-Magnetventil sowie mit einem Sperrventil in Ausbildung als 2/2-Magnetventil, sowie eines Leitungszweigs mit einer Hebe-Senk-Ventilbaugruppe mit zwei manuell betätigbaren Ventilen, nämlich einem Be-und Entlüftungsventil in Ausbildung als 3/2-Wegeventil sowie einem Sperrventil in Ausbildung als 2/2-Wegeventil. Für eine weitere Ausführungsform dieser Druckschrift werden die Ventile der Niveauregelventilbaueinheit rein pneumatisch angesteuert, wobei der Steuerdruck durch eine Reihenschaltung eines elektrisch angesteuerten 3/2-Magnetventils sowie eines rein manuell angesteuerten 3/2-Wegeventils vorgegeben wird, so dass sowohl eine elektrische als auch manuelle Beeinflussung ein- und desselben Steuerdrucks möglich ist. Druckluft gelangt hier von einem Vorratsbehälter über die manuell betätigten 3/2-Wegeventile ausschließlich über die elektrisch betätigten 3/2-Magnetventile zu dem jeweiligen Steueranschluss der Niveauregelventile.

EP 1 687 160 B1 offenbart (zusätzlich zu Ausführungsformen entsprechend EP 1 687 159 B1) eine Ausführungsform, bei welcher ein Vorratsbehälter in pneumatischer Reihenschaltung über ein Sperrventil und ein Be- und Entlüftungsventil mit Luftfederbälgen verbunden ist. Sowohl das Sperrventil als auch das Be- und Entlüftungsventil sind alternativ manuell über Betätigungsstößel sowie rein elektrisch über von einer Steuereinheit elektrisch angesteuerte Magnet-Aktuatoren angesteuert.

EP 2 070 741 B1 offenbart eine Hebe-Senk-Ventilbaugruppe, die neben der manuellen Betätigung auch elektropneumatisch gesteuert von einer Durchlassstellung in eine Sperrstellung überführbar ist. Während für bewegtes Fahrzeug und Hebe-Senk-Ventilbaugruppe in der Durchlassstellung die Niveauregelung aktiviert ist und somit ein Anheben, Konstanthalten und Absenken des Niveaus je nach Überführung des Niveauregelventils in eine Belüftungsstellung, Sperrstellung und Entlüftungsstellung möglich ist, wird durch automatisierte Umschaltung der Hebe-Senk-Ventilbaugruppe in die Sperrstellung die automatische Niveauregelung deaktiviert. Diese Deaktivierung der Niveauregelung wird gezielt entsprechend einer Beschleunigung des Anhängers eingesetzt. Beispielsweise kann die Niveauregelung aktiviert werden, wenn es zu einem Nicken des Fahrzeugs bei einem Bremsvorgang oder zu Einfederungen infolge einer Querbeschleunigung bei einer Kurvenfahrt kommt. Würde keine Deaktivierung der Niveauregelung erfolgen, würden durch die jeweilige Beschleunigung verursachte Ein- und Ausfedervorgänge der Luftfederbälge zu unnötigen Niveauregelaktionen mit einem erhöhten Druckluftverbrauch führen.

ES 2 277 765 A1 offenbart eine Luftfederungsanlage, bei welcher im Fahrbetrieb eine Niveauregelung über ein mechanisches Niveauregelventil erfolgt. Das mechanische Niveauregelventil wird durch einen Sensorarm betätigt, welcher mit einer Achse des Fahrzeugs gekoppelt ist. Zwischen Luftfederbälge und das mechanische Niveauregelventil ist ein Umschaltventil zwischengeordnet, welches in abgestelltem Zustand des Fahrzeugs das mechanische Niveauregelventil von den Luftfederbälgen abkoppelt und statt dessen die Luftfederbälge mit einem anderen pneumatischen Leitungsstrang koppelt. Grundsätzlich befindet sich das Umschaltventil federbeaufschlagt in der Stellung, in welcher das mechanische Niveauregelventil wirksam ist. Mit Anlegen eines pneumatischen Steuerdrucks an das Umschaltventil kann dieses in die andere Schaltstellung umgeschaltet werden, in welcher der andere Leitungszweig wirksam ist. Hierbei wird der Steuerdruck vorgegeben durch ein manuell betätigtes Hebe-Senk-Ventil, welches in einer Stellung I (FAHRT) keinen Steuerdruck erzeugt, so dass die mechanische Niveauregelung wirksam ist, während in Stellungen II (STOPP), IIA (HEBEN) und IIB (SENKEN) sowie III (RAMPENNIVEAU HALTEN) der Steuerdruck erzeugt wird, womit der andere Leitungszweig für die Beaufschlagung der Luftfederbälge wirksam ist. In dem anderen Leitungszweig kann die Be- und Entlüftung sowie ein Absperren der Luftfederbälge durch pneumatisch vorgesteuerte 2/2-Wegeventile erfolgen. Die Ansteuerung der 2/2-Wegeventile erfolgt durch das Hebe-Senk-Ventil über einen ersten Steuerleitungszweig mit über Nocken des Hebe-Senk-Ventils betätigten mechanisch-pneumatischen Vorsteuerventilen zwecks Gewährleistung der Betriebszustände STOPP, HEBEN und SENKEN. ES 2 277 765 A1 schlägt eine zusätzliche Bedienstellung III des Hebe-Senk-Ventils vor, in welcher ein manuell über die Betriebsstellungen II, IIA, IIB herbeigeführte Niveauhöhe an einer Rampe auch konstant gehalten wird, wenn ein Be- oder Entladen des Fahrzeugs erfolgt. Hierzu sind in einem zweiten Steuerleitungskreis für die 2/2-Wege-Ventile weitere Vorsteuerventile angeordnet, welche mechanisch über eine mechanische Kupplung mit dem Sensorarm gekoppelt sind. Während der Rampenanpassung durch manuelle Betätigung des Hebe-Senk-Ventils in den Betriebsstellungen II, IIA, IIB ist die Kupplung nicht geschlossen, so dass die manuelle Betätigung des Hebe-Senk-Ventils ausschließlich die Ansteuerung der 2/2-Wegeventile über den ersten Steuerleitungskreis zur Folge hat. Hingegen wird in der Betriebstellung III des Hebe-Senk-Ventils der erste Steuerleitungskreis deaktiviert mit gleichzeitiger Schließung der Kupplung, womit das zuvor eingestellte Niveau mit Anpassung an die Rampe gehalten werden kann über die Betätigung der Vorsteuerventile des zweiten Steuerleitungskreises über den Sensorarm. Die beiden Steuerleitungskreise sind mit den jeweiligen Steueranschlüssen der 2/2-Wegeventile jeweils über Wechselventile gekoppelt. Die Betätigung der Kupplung erfolgt pneumatisch über ein Steuerventil, welches ebenfalls über Nocken des Hebe-Senk-Ventils betätigt wird.

Eine automatisierte Rückstellung in die Betriebsstellung I (FAHRT) wird ermöglicht über einen pneumatischen, auf den Bedienhebel des Hebe-Senk-Ventils einwirkenden Rückstellzylinder, welcher elektromagnetische betätigt wird, wenn die Aufnahme des Fahrbetriebs erkannt wird.

### AUFGABE DER ERFINDUNG

Der Erfindung liegt die Aufgabe zugrunde, eine Luftfederungsanlage für ein Nutzfahrzeug vorzuschlagen, bei welcher die konstruktive Ausgestaltung und/oder die Steuerungsmöglichkeiten für eine sowohl manuelle als auch elektrische Beeinflussung des Niveaus der Luftfederungsanlage verbessert ist/sind.

### LÖSUNG

Die Aufgabe der Erfindung wird erfindungsgemäß mit den Merkmalen des unabhängigen Patentanspruchs 1 gelöst. Weitere bevorzugte erfindungsgemäße Ausgestaltungen sind den abhängigen Patentansprüchen zu entnehmen.

### BESCHREIBUNG DER ERFINDUNG

Erfindungsgemäß findet in der Luftfederungsanlage eine Hebe-Senk-Ventilbaugruppe Einsatz mit mindestens einem beliebig ausgestalteten, manuell betätigbaren Hebe-Senk-Ventil. Mit der Hebe-Senk-Ventilbaugruppe erfolgt keine unmittelbare Be- und Entlüftung von Luftfederbälgen der Luftfederungsanlage. Vielmehr wird mittels der Hebe-Senk-Ventilbaugruppe ein erster Steuerdruck erzeugt, der abhängig ist von einer manuellen Betätigung des Hebe-Senk-Ventils. Während für eine unmittelbare Be- und Entlüftung der Luftfederbälge verantwortliche Hebe-Senk-Ventilbaugruppe gemäß dem Stand der Technik die Ventilquerschnitte und damit die Abmessungen des Ventils durch die erforderlichen Be- und Entlüftungsquerschnitte vorgegeben sind, wird der konstruktive Spielraum erweitert, indem die Hebe-Senk-Ventilbaugruppe lediglich für die Erzeugung mindestens eines ersten Steuerdrucks genutzt wird.

Eine elektrische Steuerung erfolgt erfindungsgemäß über ein elektrisches Steuersignal, welches von einer geeigneten Steuereinheit erzeugt wird. Dieses elektrische Steuersignal wirkt erfindungsgemäß nicht zwingend auf einen Aktuator, welcher unmittelbar ein Be- und Entlüftungsventil für die Luftfederbälge umschaltet, was wiederum hohe konstruktive Anforderungen an die Stellkraft, den Stellweg des Aktuators und/oder den Betrag des elektrischen Steuersignals stellen würde oder Randbedingungen hinsichtlich der zu schaltenden Be- und Entlüftungsquerschnitte vorgeben würde. Vielmehr wirkt das elektrische Steuersignal auf ein elektropneumatisches Steuerventil, welches einen von dem elektrischen Steuersignal abhängigen zweiten Steuerdruck erzeugt.

Erfindungsgemäß werden also auf zwei unterschiedlichen Wegen Steuerdrücke erzeugt, nämlich einerseits ein erster Steuerdruck über die Hebe-Senk-Ventilbaugruppe sowie ein zweiter Steuerdruck über das elektropneumatische Vorsteuerventil.

Erfindungsgemäß ist eine Niveauregelventilbaugruppe mit (mindestens) einem Niveauregelventil vorgesehen. Mittels des Niveauregelventils erfolgt zur Niveauänderung eine Be- und/oder Entlüftung mindestens eines Luftfederbalgs. Vorzugsweise wird das Niveauregelventil oder sogar die gesamte Niveauregelventilbaugruppe rein pneumatisch, also nicht elektrisch und/oder manuell, gesteuert.

Erfindungsgemäß ist das mindestens eine Niveauregelventil sowohl mit dem ersten, in Abhängigkeit von einer manuellen Betätigung des Hebe-Senk-Ventils erzeugten Steuerdruck als auch mit dem zweiten, von dem elektrisch gesteuerten Vorsteuerventil erzeugten Steuerdruck beaufschlagbar, wodurch letztendlich ermöglicht ist, dass sowohl eine elektrisch gesteuerte oder geregelte Niveauänderung oder ein Konstanthalten des Niveaus mit veränderter Beladung und/oder in einem Fahrbetrieb des Nutzfahrzeugs als auch eine willkürlich manuell durch einen Benutzer herbeiführbare Niveauänderung möglich ist.

Insbesondere abweichend zu einer aus EP 1 687 159 B1 bekannten Ausführungsform sind das Hebe-Senk-Ventil und das Niveauregelventil nicht in pneumatischer Reihenschaltung angeordnet, so dass Druckluft beide genannten Ventile passieren muss, wodurch unter Umständen eine erhöhte Drosselwirkung entsteht.

Möglich ist, dass durch die parallele Anordnung des Hebe-Senk-Ventils und des Vorsteuerventils auch die Betriebssicherheit erhöht wird, da keine gegenseitige Beeinflussung der genannten Ventile bei einem Fehler eines dieser Ventile gegeben ist.

Die Beaufschlagung mindestens eines Niveauregelventils mit dem ersten Steuerdruck und dem zweiten Steuerdruck kann auf vielfältige Weise erfolgen. Für eine erste besondere Ausgestaltung der Erfindung kann dies auf besonders einfache Weise gewährleistet werden, indem einem pneumatischen Steueranschluss eines oder des Niveauregelventils ein Wechselventil vorgeordnet ist. Ein Eingang des Wechselventils ist hierbei mit dem ersten Steuerdruck beaufschlagt, also mit dem Hebe-Senk-Ventil pneumatisch verbunden, während der zweite Eingang des Wechselventils mit dem zweiten Steuerdruck beaufschlagt ist, also mit dem Vorsteuerventil pneumatisch verbunden ist. Das Wechselventil führt dann dem Steueranschluss des Niveauregelventils auf u. U. konstruktiv einfache, aber dennoch zuverlässige Weise den größeren Druck von dem ersten Steuerdruck und dem zweiten Steuerdruck zu. Unter Umständen kann durch Einsatz des Wechselventils auch eine erforderliche Leitungslänge verringert werden, da zwischen dem Ausgang des Wechselventils und dem Steueranschluss des Niveauregelventils lediglich eine Leitung erforderlich ist, über die je nach Stellung des Wechselventils dann dem Steueranschluss des Niveauregelventils der erste Steuerdruck oder der zweite Steuerdruck zugeführt wird.

Für eine zweite besondere Ausgestaltung der Erfindung besitzt das Niveauregelventil zwei pneumatische Steueranschlüsse, nämlich einen ersten Steueranschluss, welchem der erste Steuerdruck zugeführt wird und der somit pneumatisch mit dem Hebe-Senk-Ventil gekoppelt ist, und einen zweiten Steueranschluss, dem der zweite Steuerdruck zugeführt wird, so dass dieser zweite Steueranschluss des Niveauregelventils mit dem Vorsteuerventil pneumatisch verbunden ist.

Für die Erzeugung des elektrischen Steuersignals für das elektropneumatische Vorsteuerventil zur Erzeugung des zweiten Steuerdrucks gibt es vielfältige Möglichkeiten. Beispielsweise kann hierzu eine spezifische Steuereinheit vorgesehen sein, die separat von genannten Bauelementen der Luftfederungsanlage angeordnet sein kann und über eine elektrische Steuerleitung mit dem elektropneumatischen Steuerventil gekoppelt sein kann. Durchaus denkbar ist, dass diese Steuereinheit eine modulare oder integrale Baueinheit mit mindestens einer genannten Komponente der Luftfederungsanlage bildet. Für eine besondere Ausgestaltung der Erfindung ist eine multifunktionale Steuereinheit eingesetzt. Die multifunktionale Steuereinheit erzeugt mindestens ein elektrisches Steuersignal für mindestens ein elektropneumatisches Vorsteuerventil, wodurch die Steuereinheit für eine elektrische Niveauregelung (oder -steuerung) genutzt werden kann. Darüber hinaus erzeugt die multifunktionale Steuereinheit ein elektrisches Steuersignal für eine beliebig ausgestaltete Bremsanlage, insbesondere eine elektromechanische Bremse, eine elektropneumatische Bremse oder eine pneumatische Bremse mit elektronischer Bremskraftmodulation. Auch für diese Ausgestaltung kann die Steuereinheit separat von den genannten Komponenten ausgebildet sein oder aber mit mindestens einer der genannten Komponenten zu einer modularen oder integralen Baueinheit zusammengefasst sein. Um lediglich ein Beispiel zu nennen, kann die Steuereinheit in eine Bremsanlage oder ein Bremssteuergerät oder eine EBS-Einheit integriert sein.

Die erfindungsgemäße Niveauregelventilbaugruppe kann beliebig ausgestaltet sein mit einem oder mehreren darin angeordneten Niveauregelventilen beliebiger Bauart mit beliebiger Zahl der Anschlüsse, Betriebsstellungen u. ä. Möglich ist die Ausbildung der Niveauregelventile als Sitzventil oder als Schieberventil.

Für eine besondere Ausgestaltung der Erfindung ist ein Niveauregelventil der Niveauregelventilbaugruppe ein Be- und Entlüftungsventil in Ausbildung als 3/2-Wegeventil, während ein anderes Niveauregelventil der Niveauregelventilbaugruppe ein Sperrventil in Ausbildung als 2/2-Wegeventil ist. Diese Kombination konstruktiv verhältnismäßig einfacher Niveauregelventile ermöglicht dennoch zuverlässig die erforderlichen Betriebsstellungen der Niveauregelventilbaugruppe, nämlich
- ein Absperren der Luftfederbälge, wenn das Sperrventil seine Sperrstellung einnimmt, was unabhängig von der Betriebsstellung des Be- und Entlüftungsventils der Fall ist,
- ein Belüften der Luftfederbälge, wenn das Be- und Entlüftungsventil seine Belüftungsstellung einnimmt und das Sperrventil seine Durchlassstellung einnimmt sowie
- ein Entlüften der Luftfederbälge, wenn das Be- und Entlüftungsventil seine Entlüftungsstellung einnimmt und das Sperrventil in seine Durchlassstellung geschaltet ist.

Hierbei erfolgt im Rahmen der Erfindung die Umschaltung zwischen den genannten Betriebsstellungen der Niveauregelventile zumindest teilweise alternativ über den ersten und zweiten Steuerdruck, wobei auch ergänzende weitere Betätigungsmöglichkeiten von der vorliegenden Erfindung umfasst sein sollen.

Möglich ist der Einsatz der Erfindung im Rahmen einer beliebig ausgestalteten Luftfederungsanlage, die damit beispielsweise auch ein- oder zweikreisig ausgebildet sein kann. Im Fall einer einkreisigen Luftfederungsanlage kann der Einsatz eines einzigen Sperrventils in Verbindung mit einem Be- und Entlüftungsventil ausreichend sein. Für eine zweikreisige Luftfederungsanlage schlägt die Erfindung vor, dass ein Anschluss des Be- und Entlüftungsventils pneumatisch über eine Verzweigung mit zwei Sperrventilen verbunden ist. Hierdurch können separat die beiden Kreise der Luftfederungsanlage abgesperrt werden, so dass eine unterschiedliche Be-und Entlüftung der Luftfederbälge der beiden Kreise der Luftfederungsanlage ermöglicht ist. Möglich ist aber auch die (zumindest in Teilbetriebsbereichen) gemeinsame Ansteuerung der beiden Sperrventile.

Durchaus möglich ist eine strikte Trennung der beiden Kreise derart, dass eine Veränderung der pneumatischen Verhältnisse in den Luftfederbälgen der einzelnen Kreise nur möglich ist über die Niveauregelventilbaugruppe, beispielsweise das Be- und Entlüftungsventil und die beiden Sperrventile. Ist eine Kopplung der beiden Kreise gewünscht, kann zwischen die beiden Kreise eine Drossel zwischengeordnet sein, welche die beiden Kreise miteinander koppelt, wobei über die Drosselcharakteristik vorgegeben werden kann, mit welcher Schnelligkeit Druckunterschiede in den beiden Kreisen ausgeglichen werden. Ebenfalls möglich ist, dass anstelle der Drossel ein schaltbares Drosselventil eingesetzt wird, welches mittels pneumatischer Ansteuerung, vorzugsweise aber elektrische Ansteuerung, beispielsweise durch die Steuereinheit, schaltbar ist. Unter einem derartigen schaltbaren Drosselventil wird ein Drosselventil verstanden, welches unterschiedliche Drosselstellungen besitzt, was im Extremfall bedeuten kann, dass das schaltbare Drosselventil eine Sperrstellung und eine gedrosselte Koppelstellung besitzt, wobei aber auch eine mehrstufige oder kontinuierliche Veränderung der Drosselcharakteristik von der Erfindung umfasst sein soll.

Soll der Betriebssicherheit auch bei einem temporären oder dauerhaften Einbruch der elektrischen Leistungsversorgung Rechnung getragen werden, kann es von Vorteil sein, wenn in stromlosem Zustand des mindestens einen elektropneumatischen Vorsteuerventils das Niveauregelventil bzw. die Niveauregelbaugruppe eine Sperrstellung einnimmt. Dies hat zur Folge, dass für den Fall des Einbruchs der elektrischen Leistungsversorgung die Druckbeaufschlagung der Luftfederbälge "konserviert" wird, womit insbesondere ein unerwünschtes Be- oder Entlüften der Luftfederbälge infolge des elektrischen Leistungseinbruchs zuverlässig vermieden ist.

Auch die Hebe-Senk-Ventilbaugruppe kann beliebig ausgebildet sein mit einer beliebigen Anzahl von darin integrierten Hebe-Senk-Ventilen beliebiger Bauart, Zahl der Schaltstellungen und Zahl der Anschlüsse.

Für eine besondere Ausgestaltung der Erfindung besitzt die Hebe-Senk-Ventilbaugruppe zwei Hebe-Senk-Ventile, die jeweils manuell betätigbar sind. Ein Hebe-Senk-Ventil erzeugt einen ersten Steuerdruck für das Be- und Entlüftungsventil der Niveauregelventilbaugruppe, während das andere Hebe-Senk-Ventil einen ersten Steuerdruck für das Sperrventil (oder die mehreren Sperrventile für eine mehrkreisige Luftfederungsanlage) erzeugt.

In alternativer Ausgestaltung besitzt die Hebe-Senk-Ventilbaugruppe ein einziges manuell betätigbares Hebe-Senk-Ventil. Dieses Hebe-Senk-Ventil erzeugt dann sowohl einen Steuerdruck für das Be- und Entlüftungsventil als auch einen Steuerdruck für das Sperrventil oder die Sperrventile. Um lediglich einige Beispiele zu nennen, kann ein Hebe-Senk-Ventil so ausgebildet sein, dass mit manueller Betätigung eines Betätigungsorgans das Hebe-Senk-Ventil translatorisch in unterschiedliche Betriebsstellungen verschoben wird.

Vorzugsweise handelt es sich bei dem manuell betätigbaren Hebe-Senk-Ventil, insbesondere für den Fall, dass dieses sowohl den Steuerdruck für das Be- und Entlüftungsventil als auch einen Steuerdruck für das Sperrventil oder die Sperrventile erzeugt, um ein so genanntes Drehschieberventil, bei welchem über eine Verdrehung eines Betätigungsorgans mehrere Schaltstellungen eingenommen werden, vgl. auch den eingangs genannten Stand der Technik.

Durchaus möglich ist, dass die Hebe-Senk-Ventilbaugruppe mit einer Totmann-Feder ausgestattet ist, so dass nach manueller Herbeiführung einer Stellung Heben und/oder Senken eine automatische Rückkehr in eine Stellung Stopp erfolgt, wenn keine manuellen Kräfte mehr auf das Betätigungsorgan der Hebe-Senk-Ventilbaugruppe aufgebracht werden. Möglich ist auch eine Integration einer so genannten Reset-to-Ride-Funktion in die Hebe-Senk-Ventilbaugruppe. Gemäß einem weiteren Vorschlag der Erfindung ist die Hebe-Senk-Ventilbaugruppe mit einer Rast- oder Verriegelungseinheit ausgestattet, über welche eine manuell herbeigeführte Stellung, insbesondere eine Stellung Heben und/oder Senken, rastierbar oder verriegelbar ist. Dies hat den Vorteil, dass beispielsweise bei Veränderung einer Schaltstellung der Hebe-Senk-Ventilbaugruppe gegen die Wirkung einer Feder das Betätigungsorgan von dem Benutzer nicht ständig festgehalten werden muss, sondern für dauerhafte Hebe- oder Senk-Vorgänge mittels der Rastierung oder Verriegelung eine einmal herbeigeführte Schaltstellung aufrechterhalten wird. Weiterhin kann eine Rastierung oder Verriegelung auch von Vorteil sein bei dem Transport eines Nutzfahrzeugs auf einem Schiff, wo ein Absenken des Fahrzeugaufbaus dauerhaft gewünscht sein kann.

In weiterer Ausgestaltung der Erfindung ist die Rast- oder Verriegelungseinheit elektrisch, elektropneumatisch oder pneumatisch verrastbar, entrastbar, verriegelbar und/oder entriegelbar, so dass automatisch beispielsweise ein Hebe- oder Senkvorgang beendet werden kann durch Entrastung oder Entriegelung der Rast- oder Verriegelungseinheit, insbesondere wenn eine minimale oder maximale Niveauhöhe erreicht ist. Ebenfalls kann eine Schaltstellung im Rahmen einer Reset-to-Ride-Funktion entrastet oder entriegelt werden, wenn erkannt wird, dass ein Fahrbetrieb des Nutzfahrzeugs erfolgen soll.

Eine besonders kompakte Ausgestaltung der Erfindung kann sich ergeben, wenn eine pneumatische Verrastung, Entrastung, Verriegelung oder Entriegelung erfolgt. Gemäß einem Vorschlag der Erfindung wird hierfür der zweite Steuerdruck verwendet, der von dem elektrisch gesteuerten Vorsteuerventil aus gesteuert wird und mit dem auch das Niveauregelventil beaufschlagbar ist, so dass hier der zweite Steuerdruck multifunktional eingesetzt ist.

Während durchaus möglich ist, dass mindestens ein Wechselventil, mindestens ein Niveauregelventil und/oder mindestens ein Vorsteuerventil in Sitzbauweise hergestellt ist, schlägt ein weiterer Aspekt der Erfindung vor, eines oder mehrere der genannten Ventile in Schieberbauweise auszubilden.

Hierbei kann vorzugsweise auch eine so genannte Hülsentechnik Einsatz finden, wie diese beispielhaft in der Druckschrift DE 10 2009 045 734 A1 beschrieben ist.

Für den Fall, dass zwei unterschiedlichen Steueranschlüssen des Niveauregelventils der erste und zweite Steuerdruck zugeführt werden, kann ein Ventilschieber dieses Niveauregelventils über einen ersten Kolben, der mit dem ersten Steuerdruck beaufschlagt ist, betätigt werden sowie auch über einen zweiten Kolben betätigt werden, der mit dem zweiten Steuerdruck beaufschlagbar ist.

Für die weitere konstruktive Ausgestaltung dieses Lösungsgedankens gibt es vielfältige Möglichkeiten. Um lediglich ein Beispiel zu nennen, kann der Ventilschieber selber als eine Art Stufenkolben ausgebildet sein oder mit einem derartigen Stufenkolben gebildet sein, der somit integral den ersten Kolben und den zweiten Kolben bildet mit zwei Kolbenflächen, die dann mit dem jeweiligen Steuerdruck beaufschlagbar sind. Gemäß einem besonderen Vorschlag der Erfindung sind aber tatsächlich zwei separat voneinander ausgebildete Kolben eingesetzt, welche den Ventilschieber betätigen. Der erste Kolben und der zweite Kolben sind relativ zueinander verschieblich, beispielsweise gegeneinander, geführt. Ein Anschlag ist vorhanden, über welchen für eine definierte Relativverschiebung der beiden Kolben eine Bewegung der beiden Kolben miteinander koppelbar ist.

Gemäß einem besonderen Vorschlag der Erfindung ist mit der Hebe-Senk-Ventilbaugruppe, dem mindestens einen elektropneumatischen Vorsteuerventil, dem mindestens einen Niveauregelventil, der Drossel oder dem schaltbaren Drosselventil und/oder der Steuereinheit eine Baueinheit gebildet, die modular ausgebildet sein kann oder über ein gemeinsames Gehäuse verfügen kann. Der Fachmann wird verstehen, dass beliebige Kombinationen der zuvor genannten Komponenten in einer einzigen Baueinheit möglich sind.

Für im Rahmen der Erfindung genannte "...baugruppen" können diese mit einem Bauelement oder mehreren separat voneinander ausgebildeten Bauelementen gebildet sein, die über Leitungsverbindungen miteinander gekoppelt sind. Möglich ist aber auch, dass die einzelnen Komponenten der Baugruppen modular ausgebildet sind und miteinander verbindbar sind, beispielsweise über Flansche. Ebenfalls umfasst sind Baugruppen, bei welchen die einzelnen Komponenten in mindestens ein gemeinsames Gehäuse integriert sind.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1 - Fig.6**: zeigen schematisch unterschiedliche Ausgestaltungen einer erfindungsgemäßen Luftfederungsanlage.
- **Fig. 7**: zeigt schematisch eine im Rahmen der Erfindung einsetzbare Baugruppe mit einem 3/2-Wegeventil und einem Wechselventil, wobei das 3/2-Wegeventil manuell in eine Entlüftungsstellung geschaltet ist.
- **Fig. 8**: zeigt die Baugruppe gemäß Fig. 7 in einer Belüftungsstellung des 3/2-Wegeventils.
- **Fig. 9**: zeigt schematisch eine im Rahmen der Erfindung einsetzbare Baugruppe mit einem 2/2-Wegeventil sowie einem Wechselventil, wobei sich das 2/2-Wegeventil in der Sperrstellung befindet.
- **Fig. 10**: zeigt die Baugruppe gemäß Fig. 9, wobei sich das 2/2-Wegeventil in seiner Durchlassstellung befindet.
- **Fig. 11**: zeigt schematisch eine im Rahmen der Erfindung einsetzbare Baugruppe mit einem 3/2-Wegeventil, welches sich in seiner Entlüftungsstellung befindet.
- **Fig. 12**: zeigt die Baugruppe gemäß Fig. 11 in einer elektrisch angesteuerten Belüftungsstellung.
- **Fig. 13**: zeigt die Baugruppe gemäß Fig. 11 und 12 in einer manuell angesteuerten Belüftungsstellung.
- **Fig. 14**: zeigt schematisch eine im Rahmen der Erfindung einsetzbare Baugruppe mit einem 2/2-Wegeventil in seiner Sperrstellung.
- **Fig. 15**: zeigt die Baugruppe gemäß Fig. 14 in der elektrisch angesteuerten Durchlassstellung.
- **Fig. 16**: zeigt die Baugruppe gemäß Fig. 14 und 15 in der manuell angesteuerten Durchlassstellung.

### FIGURENBESCHREIBUNG

Die Figuren betreffen eine Luftfederungsanlage 1 für ein Nutzfahrzeug, insbesondere ein Zugfahrzeug oder einen Anhänger. In den Figuren sind pneumatische Bauelemente mit zumindest teilweise entsprechender Funktion und/oder konstruktiver Ausgestaltung mit denselben Bezugszeichen gekennzeichnet. Des Weiteren sind auch in einer Figur sich hinsichtlich konstruktiver Ausgestaltung und/oder Funktion entsprechende pneumatische Bauelemente mit denselben Bezugszeichen gekennzeichnet, wobei diese dann durch Ergänzung von a, b, ... voneinander unterschieden sind. Möglich ist auch, dass in einzelnen Figuren eine Komponente mit einem Bezugszeichen ohne Buchstaben gekennzeichnet ist, während in einer anderen Figur, in welcher eine entsprechende Komponente mehrfach verwendet worden ist, diese Komponente mit demselben Bezugszeichen, aber mit dem ergänzenden Kleinbuchstaben a, b, ... gekennzeichnet ist.

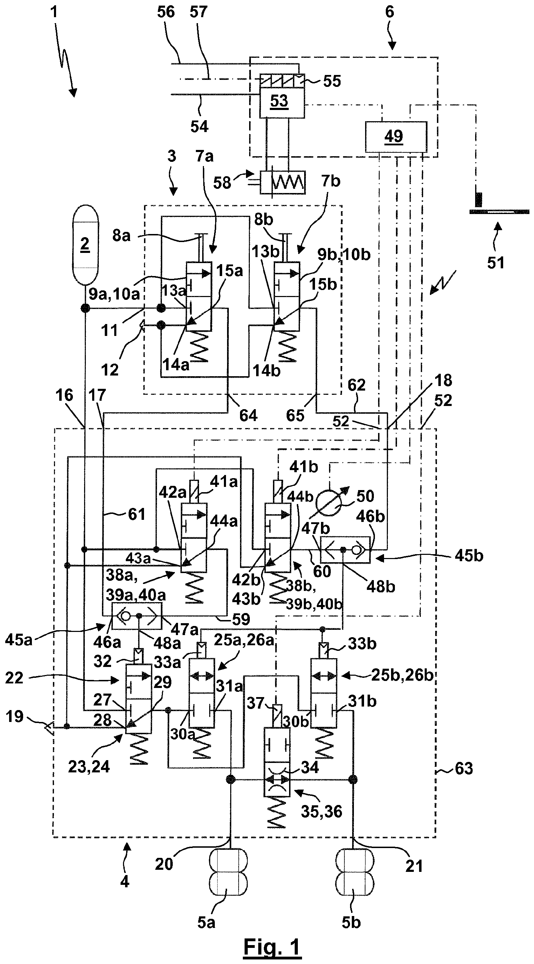

Gemäß **Fig. 1** verfügt die Luftfederungsanlage über einen Vorratsbehälter 2, eine Hebe-SenkVentilbaugruppe 3, eine Baugruppe 4 sowie Luftfederbälge 5a, 5b, welche für das Ausführungsbeispiel gemäß Fig. 1 unterschiedlichen Kreisen der hier zweikreisigen Luftfederungsanlage zugeordnet sind. Des Weiteren ist eine elektrisch gesteuerte oder geregelte pneumatische Bremsanlage 6 in Fig. 1 dargestellt. Die genannten Komponenten sind wie dargestellt über elektrische und pneumatische Leitungsverbindungen miteinander gekoppelt, was im Folgenden noch detailliert erläutert wird.

Die Hebe-Senk-Ventilbaugruppe 3 dient der Ermöglichung eines willkürlichen Herbeiführens einer Niveauänderung mit einer Veränderung der pneumatischen Beaufschlagung der Luftfederbälge 5a, 5b durch den Benutzer mittels manueller Manipulation zum Zweck des Haltens eines Niveaus mit Beladungsänderung und/oder zum willkürlichen Heben oder Senken des Fahrzeugsaufbaus bei ruhendem Nutzfahrzeug. Für das dargestellte Ausführungsbeispiel verfügt die Hebe-Senk-Ventilbaugruppe 3 über zwei Hebe-Senk-Ventile 7a, 7b, welche hier jeweils als über ein Betätigungsorgan 8a, 8b betätigbares Be- und Entlüftungsventil 9a, 9b in Ausgestaltung als 3/2-Wegeventile ausgebildet sind. Die Hebe-Senk-Ventilbaugruppe 3 verfügt über einen Anschluss 11, der unmittelbar mit dem Vorratsbehälter 2 verbunden ist. Des Weiteren verfügt die Hebe-Senk-Ventilbaugruppe 3 über einen Entlüftungsanschluss 12 sowie zwei weitere Anschlüsse 64, 65. Die Hebe-Senk-Ventile 7a, 7b verfügen jeweils über einen Anschluss 13a, 13b, die mit dem Anschluss 11 und somit mit dem Vorratsbehälter 2 verbunden sind, einen Anschluss 14a, 14b, die mit dem Entlüftungsanschluss 12 verbunden sind, sowie Anschlüsse 15a, 15b, von denen der Anschluss 15a des Hebe-Senk-Ventils 7a mit dem Anschluss 64 und der Anschluss 15b des Hebe-Senk-Ventils 7b mit dem Anschluss 65 verbunden ist. Ohne Aufbringung manueller Betätigungskräfte auf die Betätigungsorgane 8a, 8b befinden sich die Hebe-Senk-Ventile 7a, 7b in der in Fig. 1 wirksamen Entlüftungsstellung, in der die Hebe-Senk-Ventile 7a, 7b die Anschlüsse 14a, 14b mit den Anschlüssen 15a, 15b verbinden, so dass die Anschlüsse 64, 65 mit dem Entlüftungsanschluss 12 verbunden werden, während die Anschlüsse 13a, 13b abgesperrt sind. Mit Aufbringung manueller Betätigungskräfte können die Hebe-Senk-Ventile 7a, 7b einzeln oder gemeinsam und willkürlich durch den Benutzer in die andere Schaltstellung überführt werden, in welcher das oder die Hebe-SenkVentile 7a, 7b den Anschluss 13a, 13b mit dem Anschluss 15a, 15b verbinden können.

Die Baugruppe 4 besitzt einen Anschluss 16, welcher unmittelbar mit dem Vorratsbehälter 2 verbunden ist. Des Weiteren verfügt die Baugruppe 4 über Anschlüsse 17, 18, welche jeweils mit einem Anschluss 64, 65 pneumatisch unmittelbar verbunden sind. Auch die Baugruppe 4 verfügt über einen Entlüftungsanschluss 19. Darüber hinaus besitzt die Baugruppe 4 Anschlüsse 20, 21, die jeweils mit Luftfederbälgen 5a, 5b der beiden Kreise verbunden sind.

In die Baugruppe 4 integriert ist eine Niveauregelventilbaugruppe 22. Die Niveauregelventilbaugruppe 22 dient dem gesteuerten oder geregelten Absperren, Belüften und Entlüften der Anschlüsse 20, 21 und damit der Luftfederbälge 5a, 5b zum Halten eines Niveaus, zum Heben und/oder zum Senken. Für das dargestellte Ausführungsbeispiel besitzt die Niveauregelventilbaugruppe 22 ein Be- und Entlüftungsventil 23 in Ausbildung als 3/2-Wegeventil 24, welchem mindestens ein Sperrventil 25 in Ausbildung als 2/2-Wegeventil 26 nachgeordnet ist. Für die zweikreisige Ausbildung der Luftfederungsanlage 1 gemäß Fig. 1 sind zwei entsprechende Sperrventile 25a, 25b vorgesehen. Das 3/2-Wegeventil 24 verfügt über einen Anschluss 27, welcher unmittelbar mit dem Anschluss 16 und damit mit dem Vorratsbehälter 2 verbunden ist, während ein Anschluss 28 mit dem Entlüftungsanschluss 19 verbunden ist. Ein weiterer Anschluss 29 ist mit einem Anschluss 30, hier den Anschlüssen 30a, 30b der Sperrventile 25a, 25b unter Verzweigung der von dem Anschluss 29 kommenden Leitung verbunden. Neben den Anschlüssen 30a, 30b verfügen die Sperrventile 25a, 25b jeweils über einen Anschluss 31 a, 31 b, die mit einem Anschluss 20, 21 und damit mit einem Luftfederbalg 5a, 5b eines der beiden Kreise verbunden sind. Die Niveauregelventilbaugruppe 22, nämlich sowohl das Be- und Entlüftungsventil 23 als auch die Sperrventile 25a, 25b, sind ausschließlich pneumatisch angesteuert, wozu das Be- und Entlüftungsventil 23 über einen Steueranschluss 32 und die Sperrventile 25a, 25b über Steueranschlüsse 33a, 33b verfügen. Ohne (hinreichende) pneumatische Beaufschlagung der Steueranschlüsse 32, 33a, 33b befinden sich infolge der Beaufschlagung der Ventile 22, 25a, 25b jeweils durch eine Feder diese Ventile 22, 25a, 25b in den in Fig. 1 wirksamen Schaltstellungen, nämlich das Be- und Entlüftungsventil 23 in der Entlüftungsstellung, während sich die Sperrventile 25a, 25b in ihrer Sperrstellung befinden. Mit Druckbeaufschlagung des Steueranschlusses 32 mit einem hinreichenden Steuerdruck wird das Be-und Entlüftungsventil 23 umgeschaltet in die Belüftungsstellung, während mit hinreichender Druckbeaufschlagung der Steueranschlüsse 33a, 33b der Sperrventile 25a, 25b diese umgeschaltet werden in die Durchlassstellung.

Die Funktionsweise der Niveauregelventilbaugruppe 22 ist wie folgt:
Je nach Schaltstellung des Be- und Entlüftungsventils 23 ist der Anschluss 29 mit dem Entlüftungsanschluss 19 oder dem Vorratsbehälter 2 verbunden. In der Sperrstellung der Sperrventile 25a, 25b sind, ungeachtet der Schaltstellung des Be- und Entlüftungsventils 23, die Luftfederbälge 5a, 5b abgesperrt. Mit Überführung der Sperrventile 25a, 25b in die Durchlassstellung erfolgt die Verbindung der Luftfederbälge 5a, 5b mit dem Be- und Entlüftungsventil 23, so dass je nach Schaltstellung des Be- und Entlüftungsventils 23 die Be- oder Entlüftung der Luftfederbälge 5a, 5b erfolgen kann. Grundsätzlich können für die Sperrventile 25a, 25b die Luftfederbälge 5a, 5b der unterschiedlichen Kreise voneinander vollständig pneumatisch getrennt sein. Für das in Fig. 1 dargestellte Ausführungsbeispiel ist zwischen die Anschlüsse 20, 21 eine Drossel 34 zwischengeschaltet, welche die Luftfederbälge 5a, 5b der beiden Kreise miteinander verbindet. Während durchaus möglich ist, dass die Drossel 34 ständig zwischen die Luftfederbälge 5a, 5b zwischengeschaltet ist, zeigt Fig. 1 ein Ausführungsbeispiel, bei welchem die Drossel 34 Bestandteil eines schaltbaren Drosselventils 35 ist. Gemäß Fig. 1 ist das Drosselventil 35 als 2/2-Magnetventil 36 ausgebildet, wobei die beiden Anschlüsse des Drosselventils 35 jeweils mit einem Anschluss 20, 21 gekoppelt sind und in einer Schaltstellung des Drosselventils 35 die Drossel 34 zur Wirkung kommt, während in der anderen Schaltstellung die Verbindung der Luftfederbälge 5a, 5b der beiden Kreise abgesperrt ist. Für das Ausführungsbeispiel gemäß Fig. 1 besitzt das Drosselventil 35 einen elektrischen Steueranschluss 37. Die Drossel 34 bzw. das Drosselventil 35 ist ebenfalls in die Baugruppe 4 integriert.

Darüber hinaus in die Baugruppe 4 integriert ist ein elektropneumatisches Vorsteuerventil 38, hier zwei Vorsteuerventile 38a, 38b in Ausbildung als Be- und Entlüftungsventile 39a, 39b, hier in Form von 3/2-Magnetventilen 40a, 40b mit elektrischen Steueranschlüssen 41 a, 41 b. Die Vorsteuerventile 38a, 38b besitzen jeweils einen Anschluss 42a, 42b, welcher über den Anschluss 16 mit dem Vorratsbehälter 2 unmittelbar verbunden ist, einen Anschluss 43a, 43b, welche jeweils mit dem Entlüftungsanschluss 19 verbunden sind, sowie einen Anschluss 44a, 44b. Ohne (hinreichendes) elektrisches Steuersignal an den Steueranschlüssen 41 a, 41 b befinden sich die Vorsteuerventile 38a, 38b infolge einer Feder in der in Fig. 1 wirksamen Schaltstellung, in welcher die Anschlüsse 44a, 44b mit den Anschlüssen 43a, 43b verbunden sind und somit entlüftet werden. Mit (hinreichender) Beaufschlagung der Steueranschlüsse 41 a, 41 b mit den jeweiligen elektrischen Steuersignalen kann eine Umschaltung der Vorsteuerventile 38a, 38b von der Entlüftungsstellung in die Belüftungsstellung erfolgen, in welcher die Anschlüsse 44a, 44b mit den Anschlüssen 42a, 42b und somit mit dem Vorratsbehälter 2 verbunden werden. Da den Steueranschlüssen 41 a, 41 b separate elektrische Steuersignale zugeführt werden, können die Vorsteuerventile 38a, 38b gemeinsam oder einzeln umgeschaltet werden.

Weiterer Bestandteil der Baugruppe 4 ist ein Wechselventil 45, hier zwei Wechselventile 45a, 45b. Die Wechselventile 45a, 45b verfügen jeweils über Eingangsanschlüsse 46a, 46b sowie 47a, 47b und einen Ausgangsanschluss 48a, 48b. Die Eingangsanschlüsse 46a, 46b sind jeweils mit einem Anschluss 17, 18 und somit über die Anschlüsse 64, 65 mit der Hebe-Senk-Ventilbaugruppe 3, hier mit den Anschlüssen 15a, 15b der Hebe-Senk-Ventile 7a, 7b verbunden. Hingegen sind die Eingangsanschlüsse 47a, 47b innerhalb der Baugruppe 4 verbunden mit den Anschlüssen 44a, 44b der Vorsteuerventile 38a, 38b. Die Ausgangsanschlüsse 48a, 48b sind mit den pneumatischen Steueranschlüssen 32, 33a, 33b der Niveauregelventilbaugruppe 22 verbunden, wobei der Ausgangsanschluss 48a mit dem Steueranschluss 32 des Be- und Entlüftungsventils 23 verbunden ist, während der Ausgangsanschluss 48b unmittelbar über eine Verzweigung mit beiden pneumatischen Steueranschlüssen 33a, 33b der Sperrventile 25a, 25b verbunden ist.

Die Luftfederungsanlage 1 verfügt über eine Steuereinheit 49. Der Steuereinheit 49 wird ein Messsignal eines Sensors 50 zugeführt, welcher in die Baugruppe 4 integriert sein kann. Bei dem Sensor 50 handelt es sich vorzugsweise um einen Wegsensor zur Erfassung des Niveaus des Fahrzeugaufbaus, wobei alternativ oder kumulativ auch ein Drucksensor zur Erfassung eines Drucks, beispielsweise in mindestens einem der Kreise, vorhanden sein kann. Des Weiteren wird der Steuereinheit 49 ein Messsignal eines Sensors 51 zugeführt, bei welchem es sich vorzugsweise um einen Raddrehzahlsensor handelt. Die Steuereinheit 49 ermittelt elektrische Steuersignale, welche wie strichpunktiert dargestellt über elektrische Steueranschlüsse 52 der Baugruppe 4 zugeführt werden und dort den Steueranschlüssen 41 a, 41 b sowie 37 zugeführt werden. Hierbei umfasst die Erfindung auch eine Regelung der elektrischen Beaufschlagung der Steueranschlüsse 41a, 41b, 37.

Darüber hinaus ist die Steuereinheit 49 zuständig zur Ansteuerung von elektrischen oder elektropneumatischen Komponenten der Bremsanlage 6. Für das dargestellte Ausführungsbeispiel ist ein Bremssteuergerät 53 in der Bremsanlage 6 vorgesehen, welcher ein elektrisches Steuersignal der Steuereinheit 49 zugeführt wird. Des Weiteren wird dem Bremssteuergerät 53 über eine Vorratsleitung 54 ein Versorgungsdruck zugeführt sowie einem pneumatischen Steueranschluss 55 ein pneumatischer Bremssteuerdruck einer Bremsleitung 56 zugeführt. Alternativ oder kumulativ kann eine Bremssteuerung über ein elektrisches Bremssignal einer Bremsleitung 57 erfolgen, wobei die pneumatische und elektrische Bremssteuerung redundant ausgebildet sein kann mit Vorrang der elektrischen Bremssteuerung. Ebenfalls möglich ist, dass über die elektrischen Steuerungsfunktionen ausschließlich eine Bremsmodulation, eine ABS-Regelung u. ä. erfolgt. Das Bremssteuergerät 53 steuert Drücke aus sowohl für eine Federspeicherbremskammer als auch für eine Betriebsbremskammer eines Kombi-Federspeicher-bremszylinders 58.

Ohne Beschränkung der Erfindung auf die im Folgenden beispielhaft erwähnten Funktionen kann die erfindungsgemäße Luftfederungsanlage 1 wie folgt betrieben werden:
a) Während des Fahrbetriebs befindet sich die Hebe-Senk-Ventilbaugruppe 3 in der in Fig. 1 wirksamen Schaltstellung. Dies hat zur Folge, dass die Eingangsanschlüsse 46a, 46b der Wechselventile 45a, 45b entlüftet sind, so dass die Ausgangsanschlüsse 48a, 48b für drucklose Eingangsanschlüsse 47a, 47b in jedem Fall entlüftet sind und für druckbeaufschlagte Eingangsanschlüsse 47a, 47b mit den Drücken an den Eingangsanschlüssen 47a, 47b beaufschlagt sind. Demgemäß kann über das Vorsteuerventil 38a ein im Folgenden als "zweiter Steuerdruck" bezeichneter Steuerdruck 59, welcher von der Schaltstellung des Vorsteuerventils 38a abhängig ist, dem Steueranschluss 32 des Be- und Entlüftungsventils 23 zugeführt werden. Entsprechend kann den Steueranschlüssen 33a, 33b der Sperrventile 25a, 25b ein zweiter Steuerdruck 60 über den Ausgangsanschluss 48b und den Eingangsanschluss 47b von dem Vorsteuerventil 38b zugeführt werden. Auf diese Weise kann je nach elektrischer Beaufschlagung der elektrischen Steueranschlüsse 41 a, 41 b der Vorsteuerventile 38a, 38b eine pneumatische Ansteuerung der Niveauregelventilbaugruppe 22 für ein Absperren der Luftfederbälge 5a, 5b, ein Belüften oder ein Entlüften erfolgen.
b) Grundsätzlich möglich ist, dass auch für stehendes Fahrzeug, beispielsweise bei einem Be- und Entladen des Fahrzeugs, eine Niveauregelung durch die Steuereinheit 49 erfolgt, was beispielsweise mit dem Ziel des Konstanthaltens eines Niveaus während der Be- und Entladung oder einer automatisierten Niveauänderung, insbesondere für eine automatische Rampenanpassung oder für ein Absenken des Fahrzeugaufbaus auf einem Schiff u. ä. erfolgen kann.
c) Erfolgt eine manuelle Betätigung der Hebe-Senk-Ventilbaugruppe 3, befinden sich die Vorsteuerventile 38a, 38b in der in Fig. 1 wirksamen Entlüftungsstellung, wobei eine Deaktivierung der elektrischen Ansteuerung der Steueranschlüsse 41a, 41b durch die Steuereinheit 49 erfolgen kann, insbesondere mit Erkennung der manuellen Betätigung der Hebe-Senk-Ventileinheit über einen geeigneten Sensor oder mit Erkennen eines (längeren) Fahrzeugstillstands, dem Deaktivieren der Zündung u. ä. Somit sind auch die Eingangsanschlüsse 47a, 47b der Wechselventile 45a, 45b entlüftet. Dies hat zur Folge, dass mit Betätigen der Hebe-Senk-Ventilbaugruppe 3 die Wechselventile 45a, 45b die in Fig. 1 wirksame Stellung verlassen. Mit Betätigung des Hebe-Senk-Ventils 7a in die Belüftungsstellung wird Druck des Vorratsbehälters 2 über die Anschlüsse 11, 13a, 15a, 64, 17, 46a, 48a als erster Steuerdruck 61 dem Steueranschluss 32 zugeführt, womit das Be- und Entlüftungsventil 23 je nach manueller Betätigung des Hebe-Senk-Ventils 7a manuell von der Entlüftungsstellung in die Belüftungsstellung umschaltbar ist. Entsprechend wird mit manueller Umschaltung des Hebe-Senk-Ventils 7b in die Belüftungsstellung Druckluft aus dem Vorratsbehälter über den Anschluss 11, 13b, 15b, 65, 18, 46b, 48b als zweiter Steuerdruck 62 den pneumatischen Steueranschlüssen 33a, 33b zugeführt, womit diese mit manueller Betätigung des Hebe-Senk-Ventils 7b in die Durchlassstellung umschaltbar sind. Ohne Betätigung der Betätigungsorgane 8a, 8b der Hebe-Senk-Ventile 7a, 7b erfolgt die Absperrung der Luftfederbälge 5a, 5b. Wird lediglich das Betätigungsorgan 8b betätigt, hat dies zur Folge, dass die Luftfederbälge 5a, 5b entlüftet werden. Werden hingegen beide Betätigungsorgane 8a, 8b betätigt, erfolgt die Belüftung der Luftfederbälge 5a, 5b.

Ergänzend kann je nach Bedarf das Drosselventil 35 durch elektrische Beaufschlagung des Steueranschlusses 37 über die Steuereinheit 49 von der Drosselstellung in die Durchlassstellung umgeschaltet werden.

Für das dargestellte Ausführungsbeispiel sind die Niveauregelventilbaugruppe 22, die Wechselventile 45a, 45b, die Vorsteuerventile 38a, 38b, der Wegsensor 50 und das Drosselventil 36 in ein gemeinsames Gehäuse 63 der Baugruppe 4 integriert, wobei auch mindestens eines der genannten Bauelemente außerhalb eines derartigen Gehäuses 63 angeordnet sein kann und über Leitungsverbindungen integriert sein kann. Ebenfalls denkbar ist die modulare Gestaltung der Baugruppe 4.

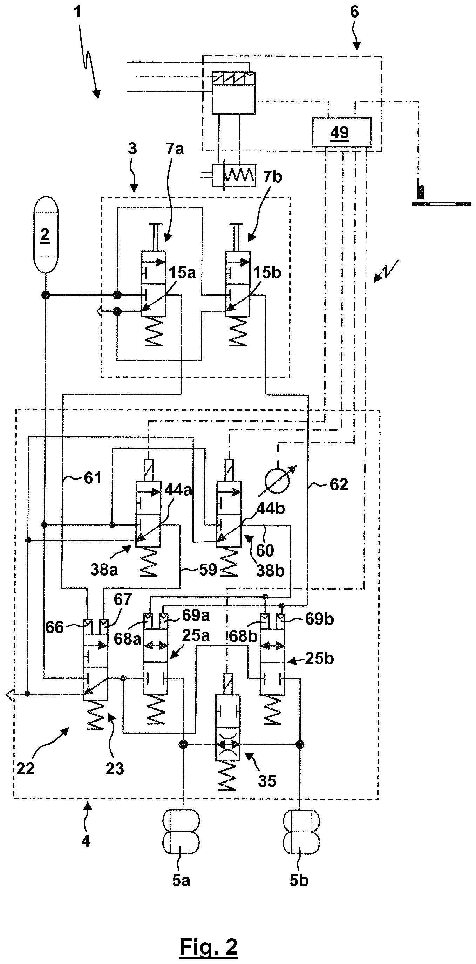

Für das Ausführungsbeispiel gemäß Fig. 1 besitzen einerseits das Be- und Entlüftungsventil 23 und andererseits die Sperrventile 25a, 25b jeweils einen einzigen Steueranschluss 32, 33a, 33b, denen alternativ entweder der erste Steuerdruck 61 bzw. 62 oder der zweite Steuerdruck 59 bzw. 60 zugeführt werden kann, was durch Einsatz der Wechselventile 45a, 45b ermöglicht ist. Bei ansonsten entsprechender Ausgestaltung sind für das Ausführungsbeispiel gemäß Fig. 2 die Wechselventile 45a, 45b entfallen. Für diese Ausgestaltung verfügen das Be- und Entlüftungsventil 23 und die Sperrventile 25a, 25b jeweils über zwei pneumatische Steueranschlüsse 66, 67 bzw. 68a, 68b und 69a, 69b. Hier ist der Anschluss 15a des Hebe-Senk-Ventils 7a unmittelbar mit dem pneumatischen Steueranschluss 66 des Be- und Entlüftungsventils 23 verbunden, so dass diesem der erste Steuerdruck 61 zugeführt wird. Der andere Steueranschluss 67 ist unmittelbar verbunden mit dem Anschluss 44a des Vorsteuerventils 38a, so dass diesem der zweite Steuerdruck 59 zugeführt wird. Die Steueranschlüsse 68a, 68b der Sperrventile 25a, 25b sind unmittelbar verbunden mit dem Anschluss 44b des Vorsteuerventils 38b, so dass diesen (über eine Verzweigung) der zweite Steuerdruck 60 zugeführt wird. Die Steueranschlüsse 69a, 69b der Sperrventile 25a, 25b sind unmittelbar (mit einer entsprechenden Verzweigung) mit dem Anschluss 15b des Hebe-Senk-Ventils 7b verbunden, so dass diese mit dem ersten Steuerdruck 62 beaufschlagt werden. Letztendlich können trotz des Entfalls der Wechselventile 45a, 45b durch Ausstattung der Ventile 23, 25 mit zwei Steueranschlüssen dieselben Funktionen gewährleistet werden, wie dies für Fig. 1 beschrieben worden ist.

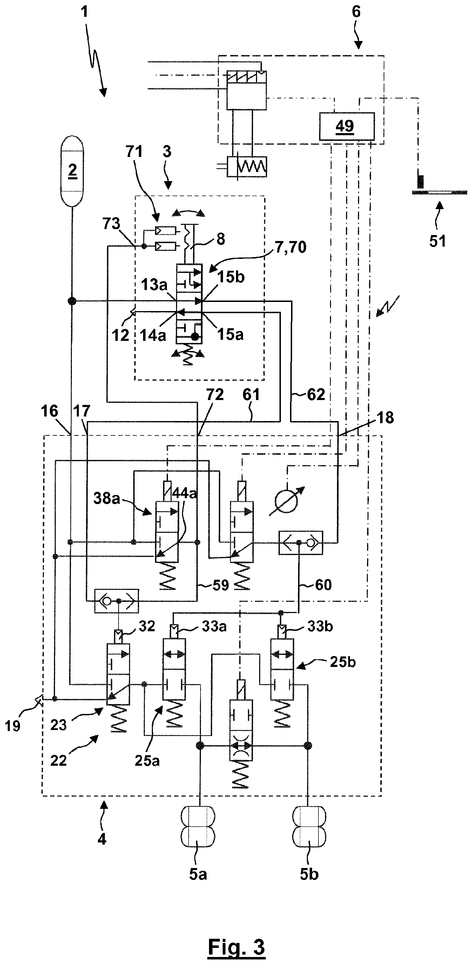

Für das in **Fig. 3** dargestellte Ausführungsbeispiel ist bei ansonsten im Wesentlichen Fig. 1 entsprechender Ausgestaltung die Hebe-Senk-Ventilbaugruppe 3 abweichend ausgebildet, indem anstelle von zwei Hebe-Senk-Ventilen 7a, 7b lediglich ein einziges Hebe-Senk-Ventil 7 eingesetzt ist. Hier ist das Hebe-Senk-Ventil 7 als manuell betätigbares 4/3-Wegeventil 70 ausgebildet, welches die Anschlüsse 13a, 14a, 15a, 15b besitzt. In einer in Fig. 3 wirksamen ersten Schaltstellung verbindet das Hebe-Senk-Ventil 7 den Anschluss 13a mit dem Anschluss 15b sowie den Anschluss 14a mit dem Anschluss 15a, was zur Folge hat, dass der erste Steuerdruck 61 dem atmosphärischen Druck entspricht, während der erste Steuerdruck 62 dem Druck in dem Vorratsbehälter entspricht. In einer zweiten Schaltstellung verbindet das Hebe-Senk-Ventil 7 beide Anschlüsse 15a, 15b mit der Entlüftung 12, so dass beide ersten Steuerdrücke 61, 62 dem atmosphärischen Druck entsprechen. In einer dritten Schaltstellung des HebeSenk-Ventils 7 werden beide Anschlüsse 15a, 15b mit dem Anschluss 13a verbunden, so dass die ersten Steuerdrücke 61, 62 dem Druck in dem Vorratsbehälter 2 entsprechen. In der zweiten Schaltstellung, welche vorzugsweise ohne manuelle Beaufschlagung des Betätigungsorgans 8 des Hebe-Senk-Ventils 7 eingenommen ist, sind die Steueranschlüsse 33a, 33b der Sperrventile 25a, 25b nicht druckbeaufschlagt, so dass die Niveauregelventilbaugruppe 22 eine Sperrstellung einnimmt, womit eine Veränderung des Druckluftniveaus in den Luftfederbälgen 5a, 5b unterbunden ist. Wird durch manuelle Betätigung des Betätigungsorgans 8 das Hebe-Senk-Ventil 7 in die erste Schaltstellung überführt, hat dies zur Folge, dass die Steueranschlüsse 33a, 33b druckbeaufschlagt werden, während der Steueranschluss 32 drucklos ist. Dies führt zu einer Entlüftung der Luftfederbälge 5a, 5b infolge der manuellen Betätigung des Betätigungsorgans 8. Erfolgt hingegen manuell die Überführung des Hebe-Senk-Ventils 7 in die dritte Schaltstellung, werden sowohl die Steueranschlüsse 33a, 33b als auch der Steueranschluss 32 druckbeaufschlagt, was zur Folge hat, dass die Luftfederbälge 5a, 5b belüftet werden. Hierbei sind die Funktionen der Baugruppe 4 und die wahlweise Weitergabe der ersten Steuerdrücke 61, 62 sowie zweiten Steuerdrücke 59, 60 entsprechend dem in Fig. 1 dargestellten Ausführungsbeispiel. Ohne dass dies zwingend der Fall ist, ist in Fig. 3 das HebeSenk-Ventil 7 als Drehschieberventil ausgebildet, bei welcher das Betätigungsorgan 8 als Schwenkhebel ausgebildet sein kann.

Als optionale Besonderheit ist für das Ausführungsbeispiel gemäß Fig. 3 die Hebe-Senk-Ventilbaugruppe 3 mit einer Rast- oder Verriegelungseinheit ausgebildet. Hinsichtlich der Ausgestaltung derartiger Rast- oder Verriegelungseinheiten 71 wird auf den vielfältigen Stand der Technik zu derartigen Rast- oder Verriegelungseinheiten verwiesen. Beispielsweise kann das Betätigungsorgan 8 über eine Rast- oder Verriegelungsnut verfügen, in welche mit Anwahl einer zu sichernden Rast- oder Verriegelungsstellung ein federbeaufschlagtes Rastelement eingreift, wodurch diese Schaltstellung des Hebe-Senk-Ventils 7 gesichert werden kann. Eine derartige Rast- oder Verriegelungsstellung kann durch "Überdrücken" durch den Benutzer wieder verlassen werden und/oder verlassen werden durch entsprechende automatisierte Ansteuerung der Rast- oder Verriegelungseinheit 71. Für das dargestellte Ausführungsbeispiel erfolgt eine pneumatische Entrastung oder Entriegelung der Rast- oder Verriegelungseinheit 71, indem in einer Rast- oder Verriegelungsstellung das Rastelement durch pneumatische Druckbeaufschlagung eines Entrast- oder Entriegelungskolbens außer Eingriff mit der Rastnut gebracht wird. Für das in Fig. 3 dargestellte Ausführungsbeispiel sichert beispielsweise die Rast- oder Verriegelungseinheit 71 die erstgenannte Schaltstellung und die drittgenannte Schaltstellung des HebeSenk-Ventils 7 entgegen der Wirkung einer Rückstellfeder in die zweite Schaltstellung. Es versteht sich, dass die Rast- oder Verriegelungseinheit 71 auch von der Steuereinheit 49 unmittelbar elektrisch angesteuert werden kann oder elektropneumatisch von der Steuereinheit 49 angesteuert werden kann. Fig. 3 zeigt hier eine besondere Ausgestaltung für die Ansteuerung der Rast- oder Verriegelungseinheit 71, indem zur Entriegelung oder Entrastung der zweite Steuerdruck 59 verwendet wird, welcher von dem Vorsteuerventil 38a ausgesteuert wird, so dass für diese Ausgestaltung das Vorsteuerventil 38a multifunktional genutzt werden kann. Dies kann beispielsweise erfolgen, wenn die Sperrventile 25a, 25b in ihre Sperrstellung gesteuert sind, so dass mit Veränderung des zweiten Steuerdrucks 59 zwar das Be- und Entlüftungsventil 23 von der Entlüftungsstellung in die Belüftungsstellung umgeschaltet wird, aber angesichts der Sperrstellung der Sperrventile 25a, 25b keine Weitergabe des Belüftungsdrucks an die Luftfederventile 5a, 5b erfolgt, während der erzeugte zweite Steuerdruck 59 dann für die Entrastung oder Entriegelung der Rast- oder Verriegelungseinheit 71 genutzt werden kann. Zu diesem Zweck besitzt die Baugruppe 4 einen zusätzlichen Anschluss 72, welcher über eine Verzweigung mit dem Anschluss 44a des Vorsteuerventils 38a verbunden ist. Der Anschluss 72 ist dann über eine Verbindungsleitung mit einem Anschluss 73 der Hebe-Senk-Ventilbaugruppe 3 verbunden, der der Rast- oder Verriegelungseinheit 71 den zweiten Steuerdruck 59 zuführt.

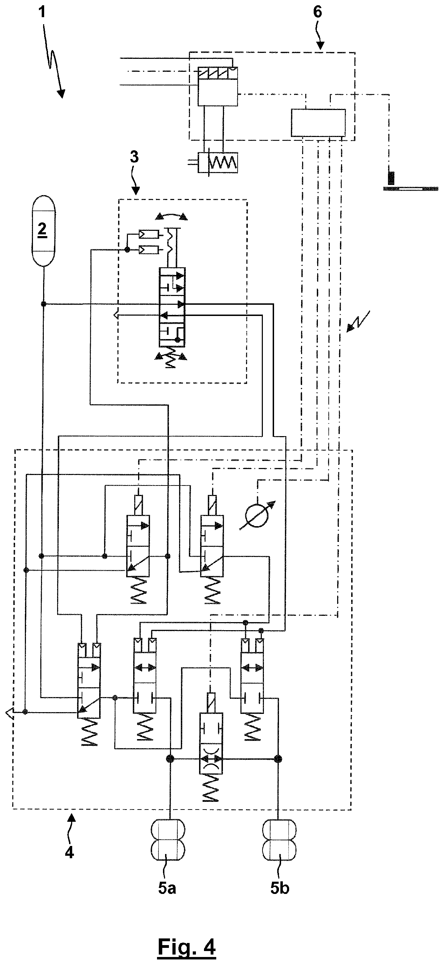

**Fig. 4** zeigt die Kombination einer Hebe-Senk-Ventilbaugruppe 3 gemäß Fig. 3 mit einer Baugruppe 4 entsprechend Fig. 2 ohne Wechselventile 45a, 45b, wobei hier das Be- und Entlüftungsventil 23 und die Sperrventile 25a, 25b entsprechend Fig. 2 jeweils mit zwei Steueranschlüssen ausgestattet sind.

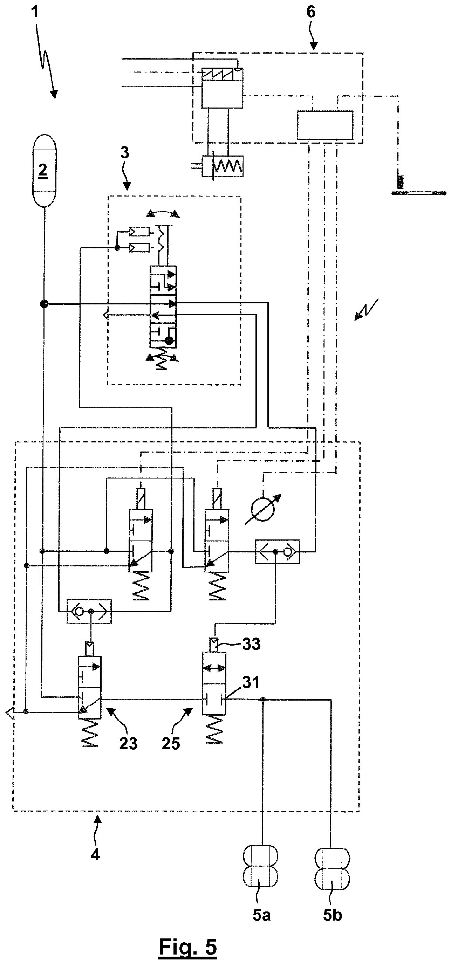

**Fig. 5** zeigt eine im Wesentlichen Fig. 3 entsprechende Ausführungsform, wobei hier allerdings die Luftfederungsanlage 1 einkreisig ausgebildet ist. Somit kann anstelle der beiden Sperrventile 25a, 25b dem Be- und Entlüftungsventil 23 lediglich ein einziges Sperrventil 25 nachgeordnet sein, dessen Anschluss 31 dann (über entsprechende Verzweigungen) mit sämtlichen Luftfederbälgen 5a, 5b verbunden ist. Somit ist der Ausgangsanschluss 48b des Wechselventils 45b hier lediglich mit einem pneumatischen Steueranschluss 33 verbunden. Eine Drossel 34 oder ein Drosselventil 35 findet hier keinen Einsatz.

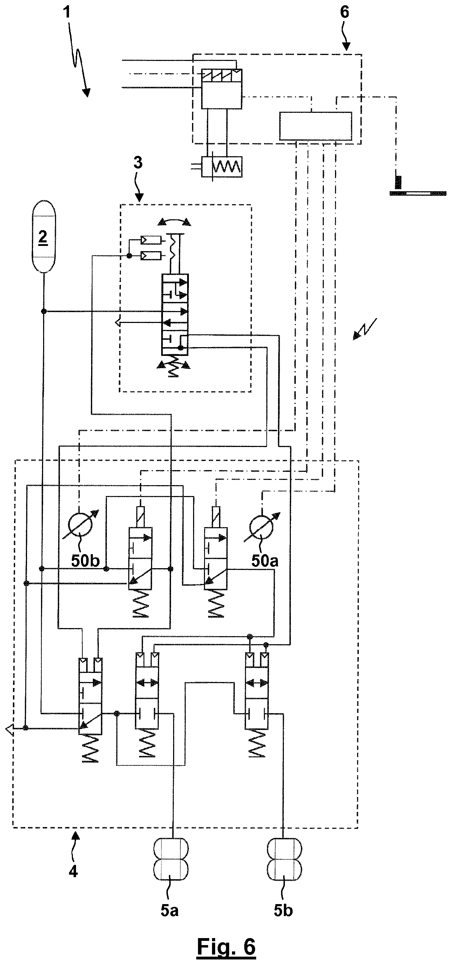

Die in **Fig. 6** dargestellte Ausführungsform der Luftfederungsanlage 1 entspricht im Wesentlichen der Ausführungsform gemäß Fig. 4. Hierbei ist aber die Kopplung der beiden Kreise der Luftfederungsanlage 1 über das Drosselventil 35 entfallen. Weiterhin sind hier zwei Sensoren 50a, 50b eingesetzt, über welche separat das Niveau der beiden Kreise erfasst werden kann. Für die in den Figuren 1-4 sowie 6 dargestellten zweikreisigen Ausgestaltungen der Luftfederungsanlagen 1 sind die beiden Kreise an sich pneumatisch voneinander getrennt, wobei selektiv die Kopplung über das Drosselventil 35 möglich ist. Für die dargestellten Ausführungsbeispiele erfolgt aber immer eine gemeinsame Be- und Entlüftung der Luftfederbälge 5a, 5b der beiden Kreise. Ist die Möglichkeit einer separaten Be- und Entlüftung der Luftfederbälge 5a, 5b erwünscht, wäre ein weiteres Vorsteuerventil 38c vorzusehen, wobei dann über Vorsteuerventile 38b, 38c separat die Steueranschlüsse 33a, 33b ansteuerbar wären. Unter Umständen sind dann auch zwei Be- und Entlüftungsventile 23a, 23b vorzusehen, die jeweils mit einem der beiden Sperrventile 25a, 25b pneumatisch verbunden sind. In diesem Fall wäre ein weiteres Vorsteuerventil vorzusehen, so dass separat auch die Be- und Entlüftungsventile 23a, 23b ansteuerbar sind.

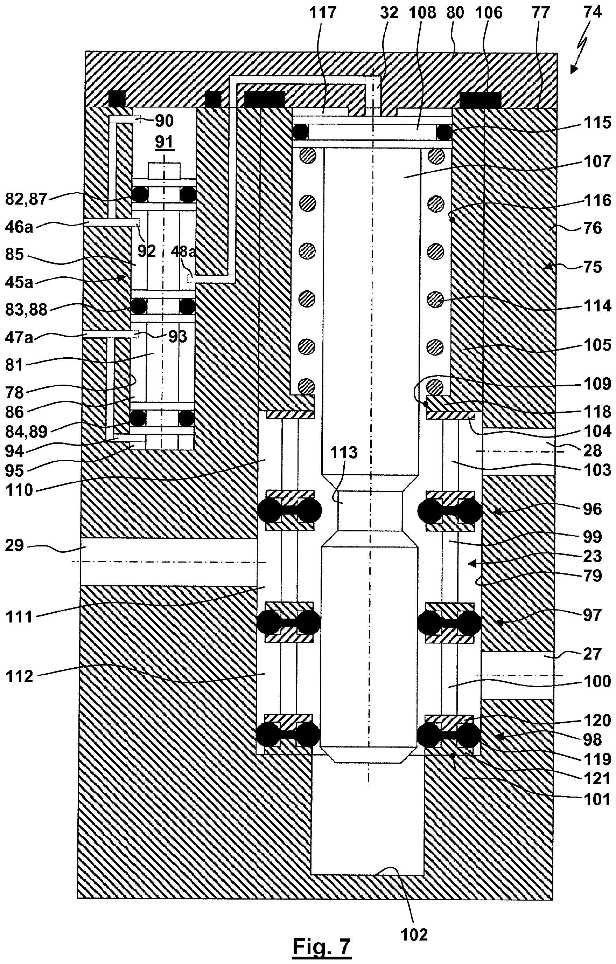

**Fig. 7** zeigt eine Baugruppe 74, in welche das Wechselventil 45a und das Be- und Entlüftungsventil 23 integriert sind. Ein Gehäuse 75 ist hierbei mit einem Grundkörper 76 gebildet, in welches von einer Stirnseite 77 zwei Sacklochbohrungen 78, 79 eingebracht sind. Die Sacklochbohrungen 78, 79 sind mit einem Deckel 80 geschlossen.

Zur Bildung des Wechselventils 45a ist in die Sacklochbohrung 78 ein Schieber 81 eingesetzt, welcher drei Steuerkanten 82, 83, 84 mit dazwischen angeordneten nutartigen oder hohlzylinderförmigen Übergangsbereichen 85, 86 ausbildet. Für das dargestellte Ausführungsbeispiel sind die Steuerkanten 82, 83, 84 mit in Umfangsnuten des Schiebers 81 aufgenommenen Dichtringen 87, 88, 89 gebildet, welche unter Abdichtung an die Sacklochbohrung 78 zur Anlage kommen.

Die Baugruppe 74 besitzt einen Anschluss 46a, der mit dem Anschluss 15a der Hebe-Senk-Ventilbaugruppe pneumatisch verbunden ist, sowie einen Anschluss 47a, der mit dem Anschluss 44a des Vorsteuerventils 38a pneumatisch verbunden ist. Der Anschluss 46a ist über eine in dem Grundkörper 76 gebildete Verzweigung pneumatisch verbunden mit einet Steuerbohrung 90, die permanent in einen auf der einen Stirnseite des Schiebers 81 angeordneten Druckraum 91 mündet, sowie mit einer Steuerbohrung 92, welche unabhängig von der Stellung des Schiebers 81 in den Übertrittsbereich 85 mündet. Der Anschluss 47a ist verbunden mit Steuerbohrungen 93, 94, wobei die Steuerbohrung 94 in einen Druckraum 95 mündet, der auf der dem Druckraum 91 gegenüberliegenden Seite des Schiebers 81 angeordnet ist, während die Steuerbohrung 93 ständig in den Übertrittsbereich 86 mündet. Für die in Fig. 7 wirksame Schaltstellung des Wechselventils 45a ist eine pneumatische Verbindung von dem Übertrittsbereich 85 zu dem Ausgangsanschluss 48a des Wechselventils 48a geschaffen. Mit einer Druckbeaufschlagung des Druckraums 95 kann der Schieber 81 in Fig. 7 nach oben verschoben werden, bis die obere Stirnseite des Schiebers 81 zur Anlage an den Deckel 80 kommt. Während dieser Bewegung überfährt die Steuerkante 83 bzw. der Dichtring 88 den Anschluss 48a bzw. eine entsprechende Steuerbohrung, womit dann die pneumatische Verbindung zwischen dem Übertrittsbereich 85 und dem Anschluss 48 unterbrochen wird, während eine Verbindung des Übertrittsbereichs 86 mit dem Ausgangsanschluss 48a geschaffen wird. Während in der erstgenannten Stellung der Anschluss 48a mit dem Anschluss 46a verbunden ist, führt die erläuterte Umschaltung des Wechselventils 45a zu der Herstellung einer Verbindung zwischen dem Anschluss 47a und dem Ausgangsanschluss 48a.

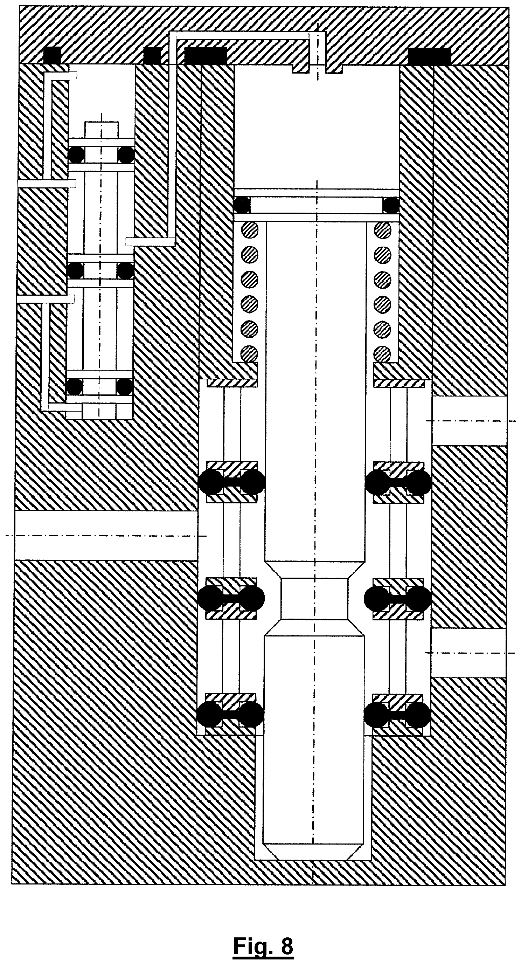

Das Be- und Entlüftungsventil 23 ist unter Einsatz einer so genannten Hülsentechnik gebildet, bei der in eine Ausnehmung Steuerkanteneinheiten 96, 97, 98 eingesetzt werden, welche durch insbesondere hülsen- oder käfigartige Abstandshalter 99, 100, 103 in einem vorgegebenen Abstand voneinander gehalten werden, vgl. auch DE 10 2009 045 734 A1. Im vorliegenden Fall sind die drei Steuerkanteneinheiten 96, 97, 98 in die Sacklochbohrung 79 eingesetzt und durch zwischengeordnete Abstandshalter 99, 100 in einem vorgegebenen Abstand zueinander gehalten. Die untere Steuerkanteneinheit 98 ist an einem vorgeordneten Absatz 101 des Bodens 102 der Sacklochbohrung 79 abgestützt. An dem Absatz 101 ist über die Steuerkannteneinheiten 96, 97, 98 und die dazwischen angeordneten Abstandshalter 99, 100 über einen weiteren Abstandshalter 103, ggf. unter Zwischenschaltung einer Abstützscheibe 104, eine passgenau zu der Sacklochbohrung 79 ausgebildete topfartige Hülse 105 abgestützt, welche durch den Deckel 80 axial verspannt und lagefixiert ist sowie abgedichtet ist, wozu ein Dichtelement 106 eingesetzt sein kann. Im Inneren der Sacklochbohrung 79 erstreckt sich ein Ventilschieber 107, welcher in dem dem Deckel 80 zugewandten Endbereich einen Steuerkolben 108 ausbildet und sich hiervon ausgehend durch eine Bohrung 109 und die Steuerkanteneinheiten 96, 97, 98 hindurch erstreckt. Auf der dem Boden 102 zugewandten Stirnseite des Ventilschiebers 107 verbleibt ein hinreichender Freiraum, so dass sich der Ventilschieber bei Druckbeaufschlagung des Steuerkolbens 108 axial in Richtung des Bodens 102 verschieben kann, vgl. den Übergang von Fig. 7 zu Fig. 8. Die Steuerkanteneinheiten 96, 97, 98 begrenzen drei Steuerkammern 110, 111, 112, welche radial außenliegend durch die Sacklochbohrung 79 und radial innenliegend durch den Ventilschieber 107 begrenzt sind. In den Steuerkammern 110-112 erstrecken sich die radial durchlässigen Abstandshalter 99, 100, 103. Der Anschluss 28 mündet in die Steuerkammer 110, während der Anschluss 27 in die Steuerkammer 112 mündet und der Anschluss 29 pneumatisch mit der Steuerkammer 111 verbunden ist. Der Ventilschieber 107 besitzt eine Steuernut 113. Befindet sich die Steuernut 113 im Bereich der Steuerkanteneinheit 96 oder Steuerkanteneinheit 97, bildet die Steuernut 113 einen Bypass, über welchen eine pneumatische Verbindung zwischen der Steuerkammer 110 und der Steuerkammer 111 bzw. der Steuerkammer 111 und der Steuerkammer 112 geschaffen ist.

Ohne pneumatische Beaufschlagung des Steueranschlusses 32 des Be- und Entlüftungsventils 23 befindet sich dieses in der in Fig. 7 dargestellten Schaltstellung. In dieser sperrt die Steuerkanteneinheit 97 den Übertritt von der Steuerkammer 111 in die Steuerkammer 112, womit die Verbindung der Anschlüsse 27, 29 gesperrt ist. Hingegen verbindet die Steuernut 113 die Steuerkammern 110, 111, womit eine pneumatische Verbindung der Anschlüsse 28, 29 geschaffen ist.

Mit pneumatischer Beaufschlagung des Steueranschlusses 32 erfolgt eine Umschaltung des Be- und Entlüftungsventils 23 in die in **Fig. 8** dargestellte Schaltstellung. In dieser sperrt die Steuerkanteneinheit 96 den Übertritt von den Steuerkammern 110, 111, so dass die Anschlüsse 28, 29 gegeneinander abgesperrt sind. Hingegen schafft in dieser Schaltstellung die Steuernut 113 eine pneumatische Verbindung zwischen den Steuerkammern 111, 112, so dass die Anschlüsse 27, 29 miteinander pneumatisch verbunden sind.

Die Beaufschlagung des Steuerkolbens 108 erfolgt entgegen der Beaufschlagung durch eine Druckfeder 114, die dafür sorgt, dass bei einem Druckeinbruch am Steueranschluss 32 das Be- und Entlüftungsventil 23 aus der Schaltstellung gemäß Fig. 8 in die Schaltstellung gemäß Fig. 7 zurückkehrt.

Der Steuerkolben 108 ist über einen Dichtring 115 gegenüber der Innenfläche 116 der Hülse 105 abgedichtet. Der den Steuerkolben 108 beaufschlagende Druckraum 117, in welchen der Anschluss 32 mündet, ist von der Steuerfläche des Steuerkolbens 108, der Innenfläche 116 der Hülse 105 und dem Deckel 80 begrenzt. Die Druckfeder 114 stützt sich mit einem Fußpunkt auf der dem Druckraum 117 gegenüberliegenden Seite des Steuerkolbens 108 ab, während der andere Fußpunkt der Druckfeder 114 an einer die Bohrung 109 umgebenden Ringfläche 118 abgestützt ist. Die Steuerkanteneinheiten 96, 97, 98 sind insbesondere modular ausgebildet mit einem in erster Näherung im Halbquerschnitt hantelförmigen Dichtelement 119, welches radial innenliegend zur Abdichtung an die Mantelfläche des Ventilschiebers 107 kommt sowie radial außenliegend zur Abdichtung an die Sacklochbohrung 79 kommt sowie zwei kreisförmigen Scheibenkörpern 120, 121, zwischen welchen das Dichtelement 119 gehalten und ggf. verspannt ist. Möglich ist aber auch, dass die Scheibenkörper 120, 121 integraler Bestandteil der Abstandshalter 99, 100, 103 sind.

Eine Verbindung der Anschlüsse 48a und 32 erfolgt im Inneren des Gehäuses 75 durch eine Verbindungsleitung, welche sich sowohl durch den Grundkörper 76 als auch durch den Deckel 80 erstreckt. Eine Abdichtung an den erforderlichen Stellen kann über zusätzliche Dichtelemente zwischen Deckel 80 und Grundkörper 76 erfolgen.

Die Funktionsweise des Wechselventils 54a im Zusammenwirken mit dem Be- und Entlüftungsventil 23 entspricht der zu Fig. 1 beschrieben Funktionsweise.

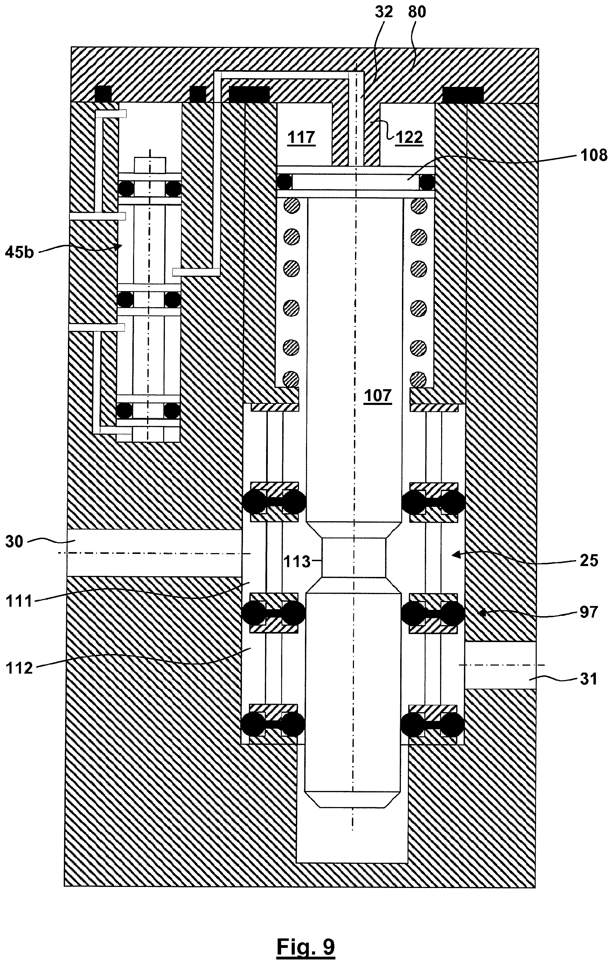

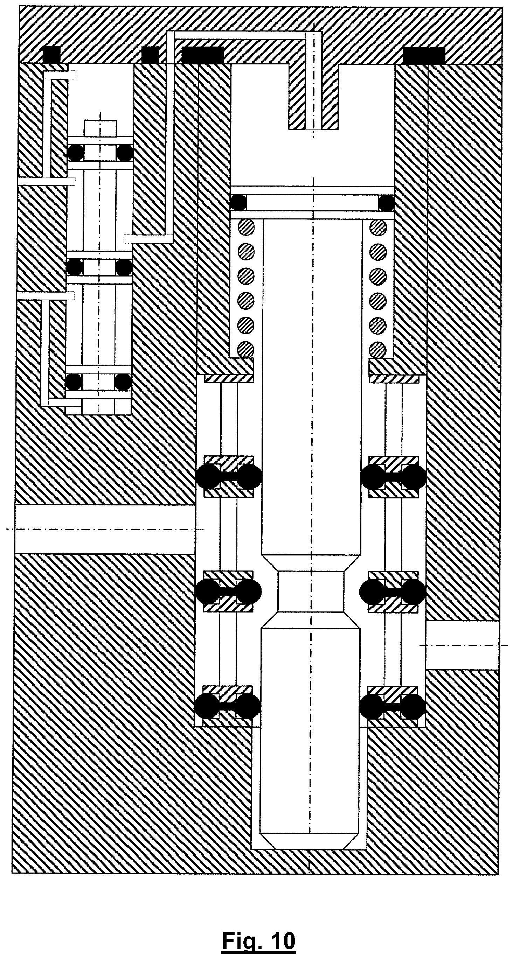

In **Fig. 9** **und** **10** ist eine Baugruppe 74 dargestellt, welche mit einer hohen Zahl von Gleichteilen oder in entsprechender konstruktiver Ausgestaltung zu dem Ausführungsbeispiel gemäß Fig. 7 und 8 hergestellt ist. Allerdings betrifft die Baugruppe 74 gemäß Fig. 9 und 10 die Kombination eines Wechselventils 45b mit einem Sperrventil 25, wozu Modifikationen erforderlich sind. Das Wechselventil 45b ist hierbei identisch dem Wechselventil 45a gemäß Fig. 7 und 8 ausgebildet. Allerdings erstreckt sich von dem Deckel 80 ein von dem Anschluss 32 durchsetzter Fortsatz 122 durch den Druckraum 117 hindurch, welcher zur Folge hat, dass in der nicht druckbeaufschlagten Schaltstellung der Steuerkolben 108 weiter nach unten verlagert ist als in Fig. 7. Dies hat wiederum zur Folge, dass die Steuernut 113 für drucklosen Steueranschluss 32 gemäß Fig. 9 keinen Bypass der Steuerkanteneinheit 96 bildet, sondern die Steuernut 113 vielmehr im Bereich der Steuerkammer 111 angeordnet ist. In dieser Schaltstellung sind die Steuerkammern 111, 112 über die Steuerkanteneinheit 97 gegeneinander abgesperrt. Erfolgt hingegen eine Druckbeaufschlagung des Druckraums 117, kommt es zur Verschiebung des Steuerkolbens 108 mit dem Ventilschieber 107 aus der Schaltstellung gemäß Fig. 9 in die Schaltstellung gemäß Fig. 10. Diese Schaltstellung entspricht hinsichtlich des Zusammenwirkens des Ventilschiebers 107 mit den Steuerkanteneinheiten 96-98 der Schaltstellung gemäß Fig. 8. Anders gesagt beschränkt der Fortsatz 122 des Deckels 80 gemäß Fig. 9 und 10 den Schiebeweg des Ventilschiebers 107 auf die letzte Teilhälfte des Schiebewegs des Ventilschiebers 107 gemäß Fig. 7 und 8. Für das Ausführungsbeispiel gemäß Fig. 9 und 10 ist kein Anschluss 28 vorgesehen, wozu wahlweise ein Gehäuse für die unterschiedlichen Ausführungsformen gemäß Fig. 7, 8 und Fig. 9 und 10 mit oder ohne Anschluss und Bohrung für den Anschluss 28 ausgestattet werden kann. Ebenfalls möglich ist, dass bei Nutzung eines einheitlich für die unterschiedlichen Ausführungsformen gefertigten Gehäuses 75 bei Einsatz gemäß Fig. 9 und 10 der Anschluss 78 mit einem Blindstopfen verschlossen wird.

In die Steuerkammer 111 mündet für das Ausführungsbeispiel gemäß Fig. 9 und 10 der Anschluss 30, während in die Steuerkammer 112 der Anschluss 31 einmündet. In der Schaltstellung gemäß Fig. 9 sind die Anschlüsse 30, 31 durch die Steuerkanteneinheit 97 gegeneinander abgesperrt, während in der Schaltstellung gemäß Fig. 10 die Durchlassstellung des Sperrventils 25 eingenommen ist, indem die Steuernut 113 die Steuerkanteneinheit 97 überbrückt.

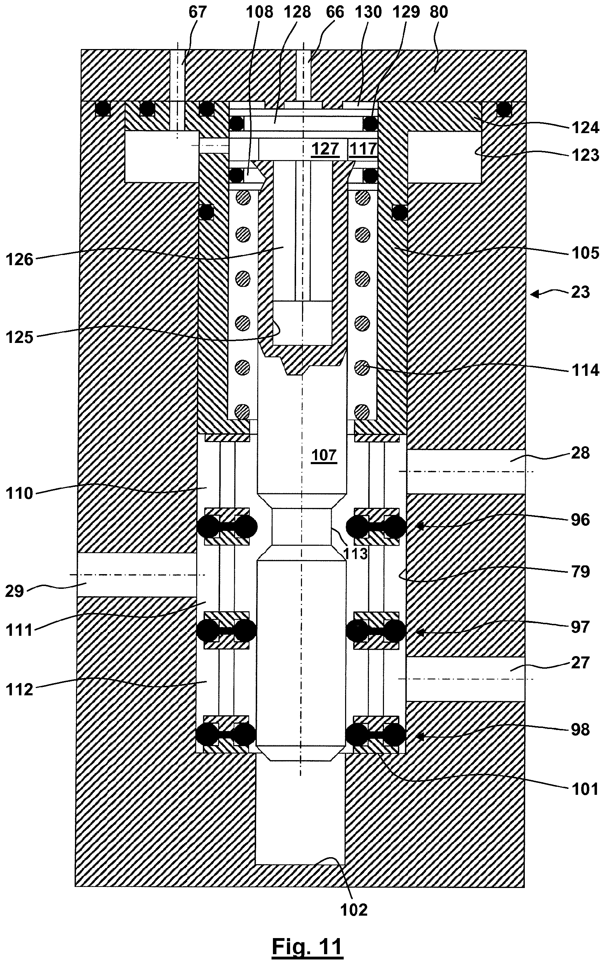

In **Fig. 11 bis 13** ist ein Be- und Entlüftungsventil 23 mit zwei Steueranschlüssen 66, 67, beispielsweise entsprechend Fig. 2, dargestellt.

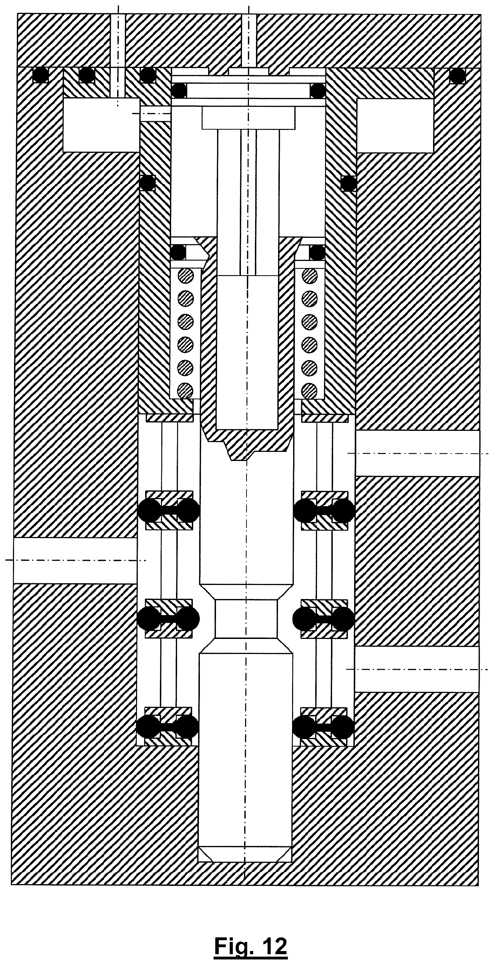

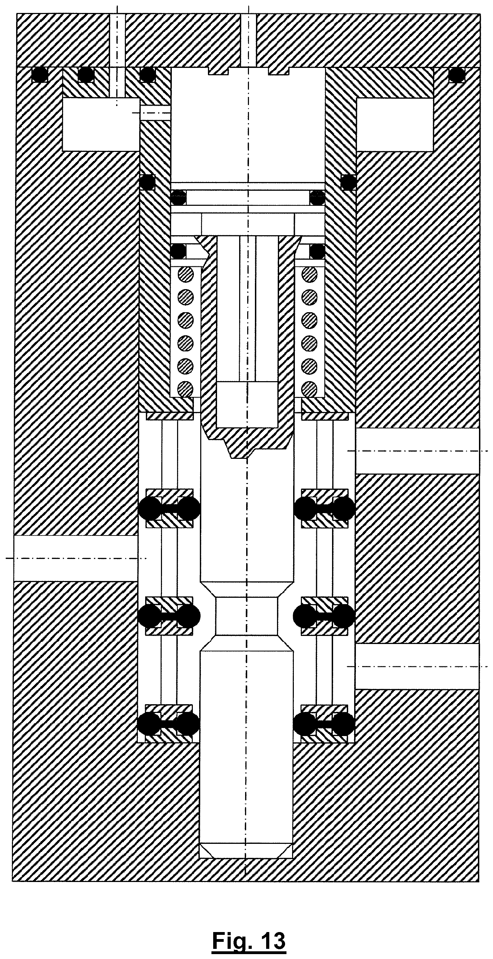

Hierbei sind die Anschlüsse 27, 28, 29, die Sacklochbohrung 79, die Steuerkammern 110, 111, 112, die Steuerkanteneinheiten 96, 97, 98, der Ventilschieber 107 in der unteren Hälfte mit Steuernut 113 entsprechend dem Be- und Entlüftungsventil 23 gemäß Fig. 7 ausgebildet. Allerdings besitzt die Sacklochbohrung 79 in dem dem Deckel 80 zugewandten Endbereich eine stufenförmige Querschnittserweiterung zu einer zylindrischen Mantelfläche 123. Die Hülse 105 besitzt in dem dem Deckel 80 zugewandten Endbereich einen kreisringförmigen, nach außen weisenden Bund 124, welcher passgenaue Aufnahme in der Mantelfläche 123 findet und an welchem der Deckel 80 zur Anlage kommt. Steuerkolben 108 und Ventilschieber 107 besitzen eine Sacklochbohrung 125. In dieser Sacklochbohrung 125 ist eine Führungsstange 126 gleitend unter Ermöglichung einer axialen Relativbewegung zwischen Ventilschieber 107 und Führungsstange 126 geführt. Die Führungsstange erstreckt sich in Richtung des Deckels 80 aus dem Ventilschieber 107 und dem Steuerkolben 108 heraus, wo ein Absatz 127 der Führungsstange 126 in der Schaltstellung gemäß Fig. 11 an der Stirnseite des Steuerkolbens 108 anliegt. Beabstandet von dem Absatz 127 verfügt die Führungsstange 126 über einen Steuerkolben 128, welcher entsprechend dem Steuerkolben 108 einen Dichtring 129 aufweist, welcher unter Abdichtung zur Anlage an die Innenfläche 116 der Hülse 105 kommt. Der Steuerkolben 128 mit Dichtring 129 besitzt denselben Durchmesser wie der Steuerkolben 108 mit Dichtring 115. Für dieses Ausführungsbeispiel ist der Druckraum 117 lediglich durch eine Kreisringfläche des Steuerkolbens 108 begrenzt, während dieser auf der gegenüberliegenden Seite über eine entsprechende Kreisringfläche des Steuerkolbens 128, radial innenliegend durch den Absatz 127 sowie radial außenliegend durch die Innenfläche 116 der Hülse 105 begrenzt ist. Auf der dem Deckel 80 zugewandten Seite begrenzt der Steuerkolben 128 einen weiteren Druckraum 130, welcher zusätzlich durch den Deckel 80 und die Innenfläche 116 der Hülse 105 begrenzt ist. Der Steueranschluss 66 mündet in den Druckraum 130, während der Steueranschluss 67 über einen den Deckel 80 sowie den Bund 124 und die Hülse 105 durchsetzenden Kanal mit dem Druckraum 117 pneumatisch verbunden ist. Die Funktionsweise des Be- und Entlüftungsventils 23 gemäß Fig. 11 bis 13 ist wie folgt:
a) Entsprechen sowohl der erste Steuerdruck 61 an dem Steueranschluss 66 als auch der zweite Steuerdruck 59 an dem Steueranschluss 67 dem atmosphärischen Druck, nimmt das Be- und Entlüftungsventil 23 die Schaltstellung gemäß Fig. 11 ein, in welcher die Druckfeder 114 den Steuerkolben 108 und hiermit den Ventilschieber 107 nach oben drücken kann, so dass die Stirnseite des Steuerkolbens 108 an den Absatz 127 angepresst wird und hierdurch der Steuerkolben 128 nach oben gedrückt wird, so dass dieser zur Anlage an den Deckel 80 kommt. In dieser Schaltstellung sind über die Steuernut 113 die Anschlüsse 28, 29 miteinander verbunden, was der Entlüftungsstellung des Be- und Entlüftungsventils 23 entspricht.
b) Wird der Steueranschluss 67 mit dem zweiten Steuerdruck 59 beaufschlagt, so gelangt dieser zweite Steuerdruck 59 in den Druckraum 117. Die Druckbeaufschlagung des Druckraums 117 hat zur Folge, dass der Steuerkolben 128 nach oben gegen den Deckel 80 gepresst wird, während der Steuerkolben 108 entgegen der Beaufschlagung durch die Druckfeder 114 nach unten gepresst und bewegt wird in die Schaltstellung gemäß Fig. 12. Die genannte Bewegung hat zur Folge, dass sich die Steuernut 113 in den Bereich der Steuerkanteneinheit 97 bewegt, womit eine Verbindung der Anschlüsse 27, 29 geschaffen wird, was der Belüftungsstellung des Be- und Entlüftungsventils 23 entspricht.
c) Wird hingegen, ausgehend von der Schaltstellung gemäß Fig. 10, der Steueranschluss 66 mit dem ersten Steuerdruck 61 beaufschlagt, führt dies dazu, dass in dem Druckraum 130 der erste Steuerdruck 61 herrscht. Dies hat zur Folge, dass der Steuerkolben 128 nach unten beaufschlagt wird. Die in dem Druckraum 130 erzeugte Druckkraft wird über den Absatz 127 auf den Steuerkolben 108 übertragen, so dass der Steuerkolben 128 und der Steuerkolben 108 gemeinsam unter Beaufschlagung der Feder 114 in die Schaltstellung gemäß Fig. 13 bewegt werden. Hiermit kann ebenfalls die Verbindung der Anschlüsse 27, 29 miteinander erfolgen, so dass die Belüftungsstellung eingenommen ist, jetzt aber durch manuelle Betätigung der Hebe-Senk-Ventileinheit 3.

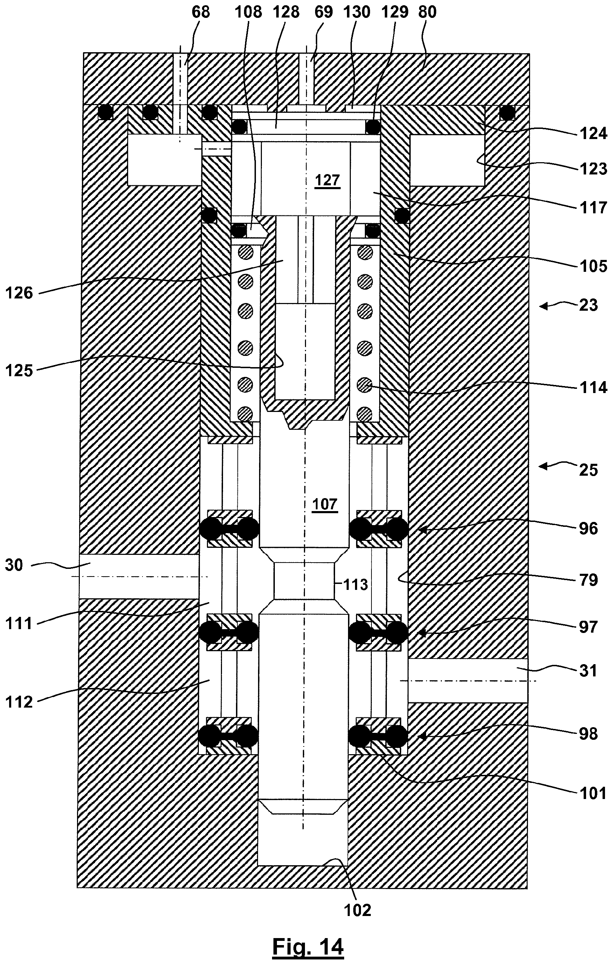

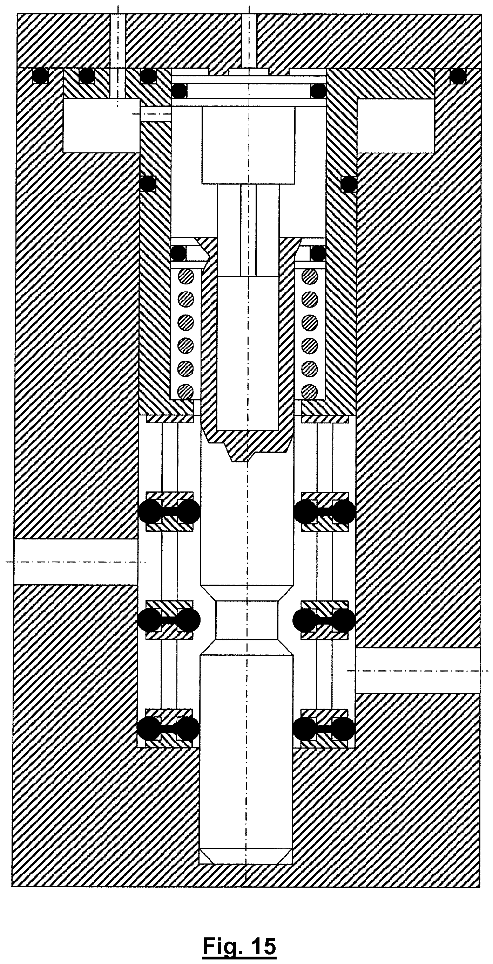

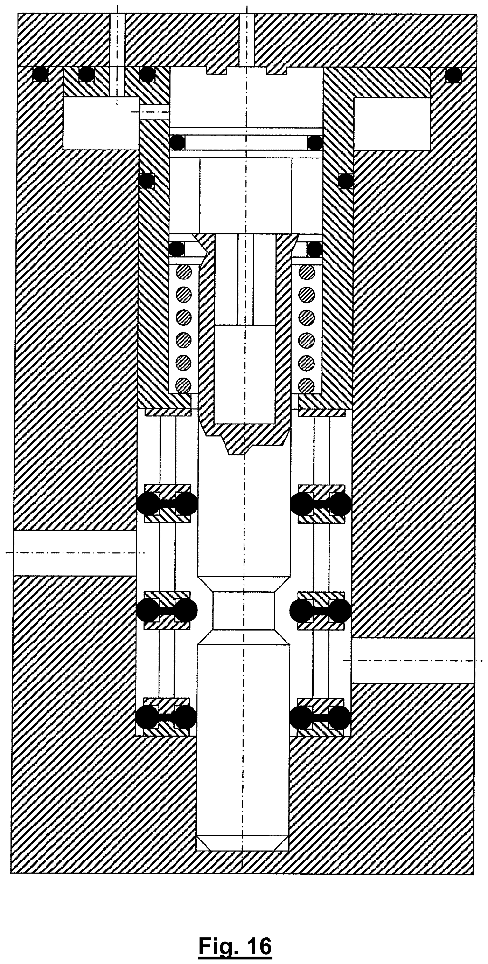

In den **Fig. 14 bis 16** ist ein Sperrventil 25 mit zwei Steueranschlüssen 68, 69 dargestellt, welches mit vielen konstruktiven Übereinstimmungen oder auch einer hohen Zahl von Gleichanteilen zu der Ausführungsform gemäß Fig. 11 bis 13 gefertigt werden kann. Hier ist der Absatz 127 mit vergrößerter axialer Erstreckung ausgebildet, was zur Folge hat, dass für Atmosphärendruck an den Steueranschlüssen 68, 69 in der Schaltstellung gemäß Fig. 14 der Ventilschieber 107 um den halben Verschiebeweg der Ausführungsform gemäß Fig. 11 bis 13 nach unten verschoben ist, was zur Folge hat, dass sich die Steuernut zwischen den beiden Steuerkanteneinheiten 96, 97 befindet. Der Anschluss 28 gemäß Fig. 11 ist für das Ausführungsbeispiel gemäß Fig. 14 bis 16 nicht vorhanden. In der Schaltstellung gemäß Fig. 14 mündet vielmehr der Anschluss 30 in die Steuerkammer 111, während der Anschluss 31 in die Steuerkammer 112 mündet und die beiden Anschlüsse 30, 31 durch die Steuerkanteneinheit 97 gegeneinander abgesperrt sind. Bei an sich dem Ausführungsbeispiel gemäß Fig. 11 bis 13 entsprechender Funktionsweise kann dann durch Zufuhr des zweiten Steuerdrucks 60 zu dem Steueranschluss 68 die Schaltstellung gemäß Fig. 15 herbeigeführt werden, während mit Zufuhr des ersten Steuerdrucks 62 zu dem Steueranschluss 69 die Schaltstellung gemäß Fig. 16 herbeigeführt werden kann. Beide Schaltstellungen gemäß Fig. 15 und 16 entsprechen der Durchlassstellung des Sperrventils 25, in welcher die Steuernut 113 eine Verbindung der Anschlüsse 30, 31 schafft.

### BEZUGSZEICHENLISTE

- 1: Luftfederungsanlage
- 2: Vorratsbehälter
- 3: Hebe-Senk-Ventilbaugruppe
- 4: Baugruppe
- 5: Luftfederbalg
- 6: Bremsanlage
- 7: Hebe-Senk-Ventil
- 8: Betätigungsorgan
- 9: Be- und Entlüftungsventil
- 10: 3/2-Wegeventil
- 11: Anschluss
- 12: Entlüftungsanschluss
- 13: Anschluss
- 14: Anschluss
- 15: Anschluss
- 16: Anschluss
- 17: Anschluss
- 18: Anschluss
- 19: Entlüftungsanschluss
- 20: Anschluss
- 21: Anschluss
- 22: Niveauregelventilbaugruppe
- 23: Be- und Entlüftungsventil
- 24: 3/2-Wegeventil
- 25: Sperrventil
- 26: 2/2-Wegeventil
- 27: Anschluss
- 28: Anschluss
- 29: Anschluss
- 30: Anschluss
- 31: Anschluss
- 32: Steueranschluss
- 33: Steueranschluss
- 34: Drossel
- 35: Drosselventil
- 36: 2/2-Magnetventil
- 37: Steueranschluss
- 38: Vorsteuerventil
- 39: Be- und Entlüftungsventil
- 40: 3/2-Magnetventil
- 41: Steueranschluss
- 42: Anschluss
- 43: Anschluss
- 44: Anschluss
- 45: Wechselventil
- 46: Eingangsanschluss
- 47: Eingangsanschluss
- 48: Ausgangsanschluss
- 49: Steuereinheit
- 50: Sensor
- 51: Sensor
- 52: Steueranschluss
- 53: Bremssteuergerät
- 54: Vorratsleitung
- 55: Steueranschluss
- 56: Bremsleitung
- 57: Bremsleitung
- 58: Kombi-Federspeicherbremszylinder
- 59: zweiter Steuerdruck
- 60: zweiter Steuerdruck
- 61: erster Steuerdruck
- 62: erster Steuerdruck
- 63: Gehäuse
- 64: Anschluss
- 65: Anschluss
- 66: Steueranschluss
- 67: Steueranschluss
- 68: Steueranschluss
- 69: Steueranschluss
- 70: 4/3-Wegeventil
- 71: Rast- oder Verriegelungseinheit
- 72: Anschluss
- 73: Anschluss
- 74: Baugruppe
- 75: Gehäuse
- 76: Grundkörper
- 77: Stirnseite
- 78: Sacklochbohrung
- 79: Sacklochbohrung
- 80: Deckel
- 81: Schieber
- 82: Steuerkante
- 83: Steuerkante
- 84: Steuerkante
- 85: Übertrittsbereich
- 86: Übertrittsbereich
- 87: Dichtring
- 88: Dichtring
- 89: Dichtring
- 90: Steuerbohrung
- 91: Druckraum
- 92: Steuerbohrung
- 93: Steuerbohrung
- 94: Steuerbohrung
- 95: Druckraum
- 96: Steuerkanteneinheit
- 97: Steuerkanteneinheit
- 98: Steuerkanteneinheit
- 99: Abstandshalter
- 100: Abstandshalter
- 101: Absatz
- 102: Boden
- 103: Abstandshalter
- 104: Abstützscheibe
- 105: Hülse
- 106: Dichtelement
- 107: Ventilschieber
- 108: Steuerkolben
- 109: Bohrung
- 110: Steuerkammer
- 111: Steuerkammer
- 112: Steuerkammer
- 113: Steuernut
- 114: Druckfeder
- 115: Dichtring
- 116: Innenfläche
- 117: Druckraum
- 118: Ringfläche
- 119: Dichtelement
- 120: Scheibenkörper
- 121: Scheibenkörper
- 122: Fortsatz
- 123: Mantelfläche
- 124: Bund
- 125: Sacklochbohrung
- 126: Führungsstange
- 127: Absatz
- 128: Steuerkolben
- 129: Dichtring
- 130: Druckraum

## Patentansprüche

1. Luftfederungsanlage (1) für ein Nutzfahrzeug mit
a) einer Hebe-Senk-Ventilbaugruppe (3), welche einen von einer manuellen Betätigung mindestens eines Hebe-Senk-Ventils (7; 7a, 7b) abhängigen ersten Steuerdruck (61, 62) erzeugt,
b) mindestens einem elektropneumatischen Vorsteuerventil (38; 38a, 38b), welches einen von einem elektrischen Steuersignal abhängigen zweiten Steuerdruck (59, 60) erzeugt,
c) einer Niveauregelventilbaugruppe (22) mit mindestens einem Niveauregelventil, über welches zur Niveauänderung und zum Konstanthalten des Niveaus in einem Fahrbetrieb eine Be- und/oder Entlüftung mindestens eines Luftfederbalgs (5a, 5b) erfolgt, wobei
d) das manuell betätigbare Hebe-Senk-Ventil (7; 7a, 7b) und das elektropneumatische Vorsteuerventil (38; 38a, 38b) in parallelen Leitungszweigen angeordnet sind und
e) das mindestens eine Niveauregelventil
ea) sowohl mit dem ersten Steuerdruck (61, 62)
eb) als auch mit dem zweiten Steuerdruck (59, 60) beaufschlagbar ist.

2. Luftfederungsanlage (1) nach Anspruch 1, **dadurch gekennzeichnet, dass** einem pneumatischen Steueranschluss (32; 33a, 33b) eines Niveauregelventils ein Wechselventil (45a; 45b) vorgeordnet ist, dessen
a) erster Eingang (Eingangsanschluss 46a, 46b) mit dem ersten Steuerdruck (61, 62) und
b) zweiter Eingang (Eingangsanschluss 47a, 47b) mit dem zweiten Steuerdruck (59,60) beaufschlagbar ist.

3. Luftfederungsanlage (1) nach Anspruch 1, **dadurch gekennzeichnet, dass** das mindestens eine Niveauregelventil
a) einen ersten pneumatischen Steueranschluss (66, 69a, 69b), welchem der erste Steuerdruck (61; 62) zugeführt wird, und
b) einen zweiten Steueranschluss (67, 68a, 68b), welchem der zweite Steuerdruck (59; 60) zugeführt wird, besitzt.

4. Luftfederungsanlage (1) nach einem der vorhergehenden Ansprüche, **dadurch gekennzeichnet, dass** eine multifunktionale Steuereinheit (49) vorhanden ist, die
a) mindestens ein elektrisches Steuersignal für mindestens ein elektropneumatisches Vorsteuerventil (38a, 38b) und
b) mindestens ein elektrisches Steuersignal für eine Bremsanlage (6) erzeugt.

5. Luftfederungsanlage (1) nach einem der vorhergehenden Ansprüche, **dadurch gekennzeichnet, dass**
a) ein Niveauregelventil der Niveauregelventilbaugruppe (22) ein Be- und Entlüftungsventil (23) in Ausbildung als 3/2-Wegeventil (24) ist und
b) ein Niveauregelventil der Niveauregelventilbaugruppe (22) ein Sperrventil (25; 25a, 25b) in Ausbildung als 2/2-Wegeventil (26, 26a, 26b) ist.

6. Luftfederungsanlage (1) nach Anspruch 5, **dadurch gekennzeichnet, dass** ein Anschluss (29) des Be- und Entlüftungsventils (23) pneumatisch über eine Verzweigung mit zwei Sperrventilen (25a, 25b) für zwei Kreise der Luftfederungsanlage (1) verbunden ist.

7. Luftfederungsanlage (1) nach Anspruch 6, **dadurch gekennzeichnet, dass** die beiden Kreise über eine Drossel (34) oder ein schaltbares Drosselventil (35) miteinander gekoppelt oder koppelbar sind.

8. Luftfederungsanlage (1) nach einem der vorhergehenden Ansprüche, **dadurch gekennzeichnet, dass** in stromlosem Zustand des mindestens einen elektropneumatischen Vorsteuerventils (38a, 38b) mindestens ein Niveauregelventil eine Sperrstellung einnimmt.

9. Luftfederungsanlage (1) nach einem der Ansprüche 5 bis 8, **dadurch gekennzeichnet, dass** die Hebe-Senk-Ventilbaugruppe (3)
a) ein manuell betätigbares Hebe-Senk-Ventil (7a), welches einen ersten Steuerdruck (61) für das Be- und Entlüftungsventil (23) erzeugt, sowie
b) ein manuell betätigbares Hebe-Senk-Ventil (7b), welches einen ersten Steuerdruck (62) für das Sperrventil (25) oder die Sperrventile (25a, 25b) erzeugt,
aufweist.

10. Luftfederungsanlage (1) nach einem der Ansprüche 5 bis 8, **dadurch gekennzeichnet, dass** die Hebe-Senk-Ventilbaugruppe (3) ein manuell betätigbares Hebe-Senk-Ventil (7) aufweist, welches sowohl einen ersten Steuerdruck (61) für das Be- und Entlüftungsventil (23) als auch einen ersten Steuerdruck (62) für das Sperrventil (25) oder die Sperrventile (25a, 25b) erzeugt.

11. Luftfederungsanlage (1) nach Anspruch 10, **dadurch gekennzeichnet, dass** das Hebe-Senk-Ventil (7)
a) einen mit dem Steueranschluss (32) des Be- und Entlüftungsventils (23) verbundenen Anschluss (15a),
b) einen mit dem Steueranschluss (33a, 33b) des Sperrventils (25a, 25b) verbundenen Anschluss (15b),
c) einen mit einer Entlüftung (12) verbundenen Anschluss (14) und
d) einen mit einem Vorratsbehälter (2) verbundenen Anschluss (13) besitzt, wobei
e) in einer Schaltstellung des Hebe-Senk-Ventils (7) der mit dem Steueranschluss (32) des Be- und Entlüftungsventils (23) verbundene Anschluss (15a) mit der Entlüftung (12) oder dem Vorratsbehälter (2) verbunden ist, während der mit dem Steueranschluss (33a, 33b) des Sperrventils (25a, 25b) verbundene Anschluss (15b) mit dem anderen von der Entlüftung (12) und dem Vorratbehälter (2) verbunden ist,
f) in einer Schaltstellung des Hebe-Senk-Ventils (7) der mit dem Steueranschluss (32) des Be- und Entlüftungsventils (23) verbundene Anschluss (15a) und der mit dem Steueranschluss (33a, 33b) des Sperrventils (25a, 25b) verbundene Anschluss (15b) mit der Entlüftung (12) verbunden ist und
g) in einer Schaltstellung des Hebe-Senk-Ventils (7) der mit dem Steueranschluss (32) des Be- und Entlüftungsventils (23) verbundene Anschluss (15a) und der mit dem Steueranschluss (33a, 33b) des Sperrventils (25a, 25b) verbundenen Anschluss (15b) mit dem Vorratsbehälter (2) verbunden ist,

12. Luftfederungsanlage (1) nach einem der vorhergehenden Ansprüche, **dadurch gekennzeichnet, dass** eine manuell herbeigeführte Stellung der Hebe-Senk-Ventilbaugruppe (3) oder mindestens eines Hebe-Senk-Ventils (7; 7a, 7b) der Hebe-Senk-Ventilbaugruppe (3) mit einer Rast- oder Verriegelungseinheit (71) rastierbar oder verriegelbar ist.

13. Luftfederungsanlage (1) nach Anspruch 12, **dadurch gekennzeichnet, dass** die Rast- oder Verriegelungseinheit (71) elektrisch, elektropneumatisch oder pneumatisch verrastbar, entrastbar, verriegelbar und/oder entriegelbar ist.

14. Luftfederungsanlage (1) nach Anspruch 13, **dadurch gekennzeichnet, dass** die Rast- oder Verriegelungseinheit (71) pneumatisch durch den oder einen zweiten Steuerdruck (59), mit dem auch das Niveauregelventil beaufschlagbar ist, verrastbar, entrastbar, verriegelbar und/oder entriegelbar ist.

15. Luftfederungsanlage (1) nach einem der vorhergehenden Ansprüche, **dadurch gekennzeichnet, dass** mindestens ein Wechselventil (45a, 45b), mindestens ein Niveauregelventil und/oder mindestens ein Vorsteuerventil (38a, 38b) in Schieberbauweise ausgebildet ist.

16. Luftfederungsanlage (1) nach Anspruch 15, **dadurch gekennzeichnet, dass** mindestens ein Wechselventil (45a, 45b), mindestens ein Niveauregelventil und/oder mindestens ein Vorsteuerventil (38a, 38b) in Schieberbauweise unter Bildung von Steuerkanten mittels einer Hülsentechnik ausgebildet ist.

17. Luftfederungsanlage (1) nach Anspruch 3 oder einem der Ansprüche 4 bis 16 in Rückbeziehung auf Anspruch 3, **dadurch gekennzeichnet, dass** in dem Niveauregelventil ein Ventilschieber (107) über einen ersten Kolben (128), der mit dem ersten Steuerdruck (61; 62) beaufschlagbar ist, sowie einen zweiten Kolben (108), der mit dem zweiten Steuerdruck (59; 60) beaufschlagbar, betätigbar ist.

18. Luftfederungsanlage (1) nach Anspruch 17, **dadurch gekennzeichnet, dass** der erste Kolben (128) und der zweite Kolben (108) relativ zueinander verschieblich sind und ein Anschlag (Absatz127) vorhanden ist, über welchen eine Bewegung der beiden Kolben (128, 108) miteinander koppelbar ist.

19. Luftfederungsanlage (1) nach einem der vorhergehenden Ansprüche, **dadurch gekennzeichnet, dass** mit
- der Hebe-Senk-Ventilbaugruppe (3),
- dem mindestens einen elektropneumatischen Vorsteuerventil (38a, 38b),
- dem mindestens einen Niveauregelventil,
- der Drossel (34) oder dem schaltbaren Drosselventil (35) und/oder
- der Steuereinheit (49)
eine Baugruppe oder Baueinheit gebildet ist.

## Claims

1. Air suspension assembly (1) for a commercial vehicle with
a) a lifting/lowering valve construction group (3), which produces a first control pressure (61, 62) dependent on a manual actuation of at least one lifting/lowering valve (7; 7a, 7b),
b) at least one electropneumatic pilot valve (38; 38a, 38b), which produces a second control pressure (59, 60) dependent on an electric control signal,
c) a levelling control valve construction group (22) with at least one levelling control valve, via which for changing the level and for holding the level constant in drive operation an aeration and/or deaeration of at least one air-suspension bellow (5a, 5b) is achieved, where
d) the lifting/lowering valve (7; 7a, 7b) that can be manually operated and the electropneumatic pilot valve (38; 38a, 38b) are arranged in parallel line branches and
e) the at least one levelling control valve can be biased
ea) with the first control pressure (61, 62)
eb) as well as with the second control pressure (59, 60).

2. Air suspension assembly (1) according to claim 1, **characterised in that** a shuttle valve (45a; 45b) is arranged upstream of a pneumatic control port (32; 33a, 33b) of a levelling control valve,
a) the first inlet (inlet port 46a, 46b) of which can be biased with the first control pressure (61, 62) and
b) the second inlet (inlet port 47a, 47b) of which can be biased with the second control pressure (59, 60).

3. Air suspension assembly (1) according to claim 1, **characterised in that** the at least one levelling control valve has
a) a first pneumatic control port (66, 69a, 69b), to which the first control pressure (61; 62) is fed, and
b) a second control port (67, 68a, 68b), to which the second control pressure (59; 60) is fed.

4. Air suspension assembly (1) according to one of the preceding claims, **characterised in that** a multifunctional control unit (49) is present which produces
a) at least one electric control signal for at least one electropneumatic pilot valve (38a, 38b) and
b) at least one electric control signal for a brake assembly (6).

5. Air suspension assembly (1) according to one of the preceding claims, **characterised in that**
a) a levelling control valve of the levelling control valve construction group (22) is an aerating and deaerating valve (23) realised as a 3/2-way valve (24) and
b) a levelling control valve of the levelling control valve construction group (22) is a shut-off valve (25; 25a, 25b) realised as a 2/2-way valve (26, 26a, 26b).

6. Air suspension assembly (1) according to claim 5, **characterised in that** a port (29) of the aerating and deaerating valve (23) is pneumatically coupled via a branching point with two shut-off valves (25a, 25b) for two circuits of the air suspension assembly (1).

7. Air suspension assembly (1) according to claim 6, **characterised in that** the two circuits are coupled or can be coupled with each other via a throttle (34) or a switchable throttle valve (35).

8. Air suspension assembly (1) according to one of the preceding claims, **characterised in that** in a currentless state of the at least one electropneumatic pilot valve (38a, 38b) at least one levelling control valve is in a shut-off position.

9. Air suspension assembly (1) according to one of claims 5 to 8, **characterised in that** the lifting/lowering valve construction group (3) comprises
a) a lifting/lowering valve (7a) which can be actuated manually and which produces a first control pressure (61) for the aerating and deaerating valve (23) and
b) a lifting/lowering valve (7b) which can be actuated manually and which produces a first control pressure (62) for the shut-off valve (25) or the shut-off valves (25a, 25b).

10. Air suspension assembly (1) according to one of claims 5 to 8, **characterised in that** the lifting/lowering valve construction group (3) comprises a lifting/lowering valve (7) which can be actuated manually and which produces a first control pressure (61) for the aerating and deaerating valve (23) and a first control pressure (62) for the shut-off valve (25) or the shut-off valves (25a, 25b).

11. Air suspension assembly (1) according to claim 10, **characterised in that** the lifting/lowering valve (7) has
a) a port (15a) connected to the control port (32) of the aerating and deaerating valve (23),
b) a port (15b) connected to the control port (33a, 33b) of the shut-off valve (25a, 25b),
c) a port (14) connected to an aeration (12) and
d) a port (13) connected to a reservoir (2),
where
e) in a switching position of the lifting/lowering valve (7) the port (15a) connected to the control port (32) of the aerating and deaerating valve (23) is connected to the aeration (12) or to the reservoir (2), while the port (15b) connected to the control port (33a, 33b) of the shut-off valve (25a, 25b) is connected to the other of the aeration (12) and the reservoir (2),
f) in a switching position of the lifting/lowering valve (7) the port (15a) connected to the control port (32) of the aerating and deaerating valve (23) and the port (15b) connected to the control port (33a, 33b) of the shut-off valve (25a, 25b) is connected to the aeration (12) and
g) in a switching position of the lifting/lowering valve (7) the port (15a) connected to the control port (32) of the aerating and deaerating valve (23) and the port (15b) connected to the control port (33a, 33b) of the shut-off valve (25a, 25b) is connected to the reservoir (2).

12. Air suspension assembly (1) according to one of the preceding claims, **characterised in that** a manually induced position of the lifting/lowering valve construction group (3) or of at least one lifting/lowering valve (7; 7a, 7b) of the lifting/lowering valve construction group (3) can be latched, snapped or locked by a latching, snapping or locking unit (71).

13. Air suspension assembly (1) according to claim 12, **characterised in that** the latching, snapping or locking unit (71) can be latched, unlatched, snapped, unsnapped, locked and/or unlocked electrically, electropneumatically or pneumatically.

14. Air suspension assembly (1) according to claim 13, **characterised in that** the latching, snapping or locking unit (71) can be latched, unlatched, snapped, unsnapped, locked and/or unlocked by the or a second control pressure (59), with which the levelling control valve, too, can be pressurised.

15. Air suspension assembly (1) according to one of the preceding claims, **characterised in that** at least one shuttle valve (45a, 45b), at least one levelling control valve and/or at least one pilot valve (38a, 38b) is constructed in a sliding valve type.

16. Air suspension assembly (1) according to claim 15, **characterised in that** at least one shuttle valve (45a, 45b), at least one levelling control valve and/or at least one pilot valve (38a, 38b) are/is constructed in a sliding valve type with control edges by use of a sleeve technique.

17. Air suspension assembly (1) according to claim 3 or one of claims 4 to 16 referring back to claim 3, **characterised in that** in the levelling control valve a valve slide (107) can be actuated via a first piston (128), which can be biased with the first control pressure (61; 62), and a second piston (108), which can be biased with the second control pressure (59; 60).

18. Air suspension assembly (1) according to claim 17, **characterised in that** the first piston (128) and the second piston (108) are slidable relative to each other and a stop (ledge 127) is present, via which a motion of the two pistons (128, 108) can be coupled.

19. Air suspension assembly (1) according to one of the preceding claims, **characterised in that** a construction group or construction unit is formed with
- the lifting/lowering valve construction group (3),
- the at least one electropneumatic pilot valve (38a, 38b),
- the at least one levelling control valve
- the throttle (34) or the switchable throttle valve (35) and/or
- the control unit (49).

## Revendications

1. Installation de ressort pneumatique (1) pour un véhicule utilitaire, avec
a) un ensemble de soupape de levage-abaissement (3) qui produit une première pression de commande (61, 62) dépendant d'un actionnement manuel d'au moins une soupape de levage-abaissement (7; 7a, 7b),
b) au moins une soupape pilote (38; 38a, 38b) électropneumatique qui produit une deuxième pression de commande (59, 60) dépendant d'un signal de commande électrique,
c) un ensemble de soupape de régulation de niveau (22) avec au moins une soupape de régulation de niveau par le biais de laquelle une ventilation et/ou une aération d'au moins un soufflet de ressort pneumatique (5a, 5b) sont effectuées pour faire varier le niveau et pour le maintien du niveau à une valeur constante dans un mode de marche,
d) la soupape de levage-abaissement (7; 7a, 7b) actionnable manuellement et la soupape pilote (38; 38a, 38b) électropneumatique étant disposées dans des branches de conduite parallèles, et
e) la soupape de régulation de niveau au moins au nombre de un est exposée
ea) aussi bien à la première pression de commande (61, 62)
eb) qu'à la deuxième pression de commande (59, 60).

2. Installation de ressort pneumatique (1) selon la revendication 1, **caractérisée en ce qu**'une soupape de commutation (45a; 45b) est montée en amont d'une borne de commande (32; 33a, 33b) pneumatique d'une soupape de régulation de niveau, soupape de commutation dont
a) la première entrée (raccord d'entrée 46a, 46b) peut être exposée à la première pression de commande (61, 62) et
b) la deuxième entrée (raccord d'entrée 47a, 47b) peut être exposée à la deuxième pression de commande (59, 60).

3. Installation de ressort pneumatique (1) selon la revendication 1, **caractérisée en ce que** la soupape de régulation de niveau au moins au nombre de un possède
a) une première borne de commande (66, 69a, 69b) pneumatique à laquelle est conduite la première pression de commande (61; 62), et
b) une deuxième borne de commande (67, 68a, 68b) à laquelle est conduite la deuxième pression de commande (59; 60).

4. Installation de ressort pneumatique (1) selon l'une des revendications précédentes, **caractérisée par** la présence d'une unité de commande (49) multifonctionnelle qui produit
a) au moins un signal de commande électrique pour au moins une soupape pilote (38a, 38b) électropneumatique et
b) au moins un signal de commande électrique pour un circuit de freinage (6).

5. Installation de ressort pneumatique (1) selon l'une des revendications précédentes, **caractérisée en ce que**
a) une soupape de régulation de niveau de l'ensemble de soupape de régulation de niveau (22) est une soupape de ventilation et d'aération (23) réalisée en tant que soupape 3/2 voies (24), et
b) une soupape de régulation de niveau de l'ensemble de soupape de régulation de niveau (22) est une soupape d'arrêt (25; 25a, 25b) réalisée en tant que soupape 2/2 voies (26; 26a, 26b).

6. Installation de ressort pneumatique (1) selon la revendication 5, **caractérisée en ce qu**'un raccord (29) de la soupape de ventilation et d'aération (23) est, par le biais d'une ramification, raccordé pneumatiquement à deux soupapes d'arrêt (25a, 25b) pour deux circuits de l'installation de ressort pneumatique (1).

7. Installation de ressort pneumatique (1) selon la revendication 6, **caractérisée en ce que** les deux circuits sont couplés ou peuvent être couplés l'un à l'autre par le biais d'un étranglement (34) ou d'une valve d'étranglement (35) commutable.

8. Installation de ressort pneumatique (1) selon l'une des revendications précédentes, **caractérisée en ce que,** dans l'état hors courant de la soupape pilote (38a, 38b) électropneumatique au moins au nombre de un, au moins une soupape de régulation de niveau adopte une position de fermeture.

9. Installation de ressort pneumatique (1) selon l'une des revendications 5 à 8, **caractérisée en ce qu**e l'ensemble de soupape de levage-abaissement (3)
a) présente une soupape de levage-abaissement (7a) pouvant être actionnée manuellement qui produit une première pression de commande (61) pour la soupape de ventilation et d'aération (23), ainsi
b) qu'une soupape de levage-abaissement (7b) pouvant être actionnée manuellement qui produit une première pression de commande (62) pour la soupape d'arrêt (25) ou les soupapes d'arrêt (25a, 25b).

10. Installation de ressort pneumatique (1) selon l'une des revendications 5 à 8, **caractérisée en ce que** l'ensemble de soupape de levage-abaissement (3) présente une soupape de levage-abaissement (7) pouvant être actionnée manuellement qui produit aussi bien une première pression de commande (61) pour la soupape de ventilation et d'aération (23) qu'une première pression de commande (62) pour la soupape d'arrêt (25) ou les soupapes d'arrêt (25a, 25b).

11. Installation de ressort pneumatique (1) selon la revendication 10, **caractérisée en ce que** la soupape de levage-abaissement (7) possède
a) un raccord (15a) raccordé à la borne de commande (32) de la soupape de ventilation et d'aération (23),
b) un raccord (15b) raccordé à la borne de commande (33a, 33b) de la soupape d'arrêt (25a, 25b),
c) un raccord (14) raccordé à une ventilation (12) et
d) un raccord (13) raccordé à un réservoir (2),
e) dans une position de commutation de la soupape de levage-abaissement (7), le raccord (15a) raccordé à la borne de commande (32) de la soupape de ventilation et d'aération (23) étant raccordé à la ventilation (12) ou au réservoir (2) tandis que le raccord (15b) raccordé à la borne de commande (33a, 33b) de la soupape d'arrêt (25a, 25b) est raccordé à l'autre élément parmi la ventilation (12) et le réservoir (2),
f) dans une position de commutation de la soupape de levage-abaissement (7),le raccord (15a) raccordé à la borne de commande (32) de la soupape de ventilation et d'aération (23) et le raccord (15b) raccordé à la borne de commande (33a, 33b) de la soupape d'arrêt (25a, 25b) étant raccordés à la ventilation (12) et
g) dans une position de commutation de la soupape de levage-abaissement (7), le raccord (15a) raccordé à la borne de commande (32) de la soupape de ventilation et d'aération (23) et le raccord (15b) raccordé à la borne de commande (33a, 33b) de la soupape d'arrêt (25a, 25b) étant raccordés au réservoir (2).

12. Installation de ressort pneumatique (1) selon l'une des revendications précédentes, **caractérisée en ce qu**'une position réalisée manuellement de l'ensemble de soupape de levage-abaissement (3) ou d'au moins une soupape de levage-abaissement (7; 7a, 7b) de l'ensemble de soupape de levage-abaissement (3) peut être encliquetée ou verrouillée avec une unité d'encliquetage ou de verrouillage (71).

13. Installation de ressort pneumatique (1) selon la revendication 12, **caractérisée en ce que** l'unité d'encliquetage ou de verrouillage (71) peut être encliquetée, décliquetée, verrouillée et/ou déverrouillée de façon électrique, électropneumatique ou pneumatique.

14. Installation de ressort pneumatique (1) selon la revendication 13, **caractérisée en ce que** l'unité d'encliquetage ou de verrouillage (71) peut être encliquetée, décliquetée, verrouillée et/ou déverrouillée pneumatiquement par la pression de commande (59) ou une deuxième pression de commande (59) à laquelle la soupape de régulation de niveau peut également être exposée.

15. Installation de ressort pneumatique (1) selon l'une des revendications précédentes, **caractérisée en ce qu**'au moins une soupape de commutation (45a, 45b), au moins une soupape de régulation de niveau et/ou au moins une soupape pilote (38a, 38b) est constituée selon une fabrication en tiroir.

16. Installation de ressort pneumatique (1) selon la revendication 15, **caractérisée en ce qu**'au moins une soupape de commutation (45a, 45b), au moins une soupape de régulation de niveau et/ou au moins une soupape pilote (38a, 38b) est constituée selon une fabrication en tiroir avec formation de bords de commande au moyen d'une technique de douille.

17. Installation de ressort pneumatique (1) selon la revendication 3 ou l'une des revendications 4 à 16 dépendant de la revendication 3, **caractérisée en ce que,** dans la soupape de régulation de niveau, un tiroir de soupape (107) peut être actionné par le biais d'un premier piston (128) qui peut être exposé à la première pression de commande (61; 62), ainsi que par le biais d'un deuxième piston (108) qui peut être exposé à la deuxième pression de commande (59; 60).

18. Installation de ressort pneumatique (1) selon la revendication 17, **caractérisée en ce que** le premier piston (128) et le deuxième piston (108) peuvent coulisser l'un par rapport à l'autre, et **caractérisée par** la présence d'une butée (épaulement 127) par le biais de laquelle un mouvement des deux pistons (128, 108) peut être couplé.

19. Installation de ressort pneumatique (1) selon l'une des revendications précédentes, **caractérisée en ce qu**'un ensemble ou une unité peut être formé(e) avec
- l'ensemble de soupape de levage-abaissement (3),
- la soupape pilote (38a, 38b) électropneumatique au moins au nombre de un,
- la soupape de régulation de niveau au moins au nombre de un,
- l'étranglement (34) ou la soupape d'étranglement (35) commutable et/ou
- l'unité de commande (49).
